# EUROPÄISCHE PATENTSCHRIFT

(11) **EP 2 288 487 B1**
(45) Veröffentlichungstag und Bekanntmachung des Hinweises auf die Patenterteilung: **10.10.2012**
(21) Anmeldenummer: 09768910.3
(22) Anmeldetag: 10.06.2009
(51) Int. Cl.: B29C 70/84, B29C 65/00

(54) **VERFAHREN ZUR FERTIGUNG EINES ROTORBLATTES FÜR EINE WINDENERGIEANLAGE**
METHOD FOR THE PRODUCTION OF A ROTOR BLADE FOR A WIND TURBINE
PROCÉDÉ DE FABRICATION D'UNE PALE DE ROTOR POUR UNE ÉOLIENNE

(30) Priorität: 27.06.2008 DE 102008030132
(43) Veröffentlichungstag der Anmeldung: 02.03.2011
(73) Patentinhaber: REpower Systems SE, 22297 Hamburg (DE)
(72) Erfinder: BENDEL, Urs, 24787 Fockbek (DE); EYB, Enno, 24118 Kiel (DE); KNOPS, Martin, 24787 Fockbek (DE)
(74) Vertreter: Seemann, Ralph
(86) Internationale Anmeldenummer: PCT/EP2009/004179
(87) Internationale Veröffentlichungsnummer: WO 2009/156061

(56) Entgegenhaltungen:
- US-A1- 2007 140 858
- US-A1- 2008 069 699

## Beschreibung

Die Erfindung betrifft ein Verfahren zur Fertigung eines Rotorblattes für eine Windenergieanlage, das sich in betriebsbereitem Zustand von einem Blattwurzelbereich zum Anschluss an eine Rotornabe der Windenergieanlage bis zu einer Blattspitze längserstreckt und das für seine Fertigung in wenigstens zwei Segmente eingeteilt ist, wobei wenigstens eine Unterteilung etwa quer zu seiner Längserstreckung zwischen dem Blattwurzelbereich und der Blattspitze vorgesehen ist.

Geteilte bzw. segmentierte Rotorblätter für eine Windenergieanlage sind zur Erleichterung ihrer Herstellung, ihres Transports und ihrer Montage prinzipiell seit langem bekannt, zum Beispiel aus der DE 31 13 079 A1. Da bevorzugt beim Stand der Technik auch der Transport erleichtert werden soll, werden die Segmente des Rotorblattes bevorzugt erst am Aufstellungsort der Windenergieanlage zusammengebaut und dafür auch konzipiert.

US 2007 0140858 A1 offenbart ein modular konstruiertes Rotorblatt aus einer Mehrzahl von Rotorblattsektionen, die miteinander verklebt sind.

US 2008 0069699 A1 offenbart ein Rotorblatt einer Windenergieanlage, das wenigstens zwei Rotorblattsektionen aufweist, die eine oder mehr Verstärkungsstrukturen umfassen, wobei die Verstärkungsstrukturen in einer Verbindungsstelle miteinander verbunden sind sowie ein Verfahren gemäß dem Oberbegriff des Anspruchs 1. An den Verbindungsstellen greifen die Verstärkungsstrukturen ineinander.

Der Erfindung liegt demgegenüber die Aufgabe zugrunde, die Fertigung des Rotorblatts, insbesondere für eine Serienfertigung, zu erleichtern und zeitlich verkürzbar zu machen und dennoch das fertige Rotorblatt wie ein gewohntes einheitliches Rotorblatt bereitzustellen.

Diese Aufgabe wird erfindungsgemäß in Verfahrenshinsicht durch den Gegenstand des Anspruchs 1 gelöst, wobei insbesondere wenigstens zwei Segmente in einer Integrationsvorrichtung miteinander verbunden werden.

Erfindungsgemäß können mit Vorteil Segmente oder Teile eines Rotorblattes zwar vorzugsweise wenigstens zum Teil zunächst getrennt gefertigt oder vorgefertigt werden, was den Vorteil hat, dass eine Fertigung wenigstens zum Teil zeitlich parallel vorge-nommen werden kann, jedoch werden danach die Segmente oder Teile des Rotorblattes miteinander zu einem einheitlichen Rotorblatt integriert. Über die damit verbundenen zeitlichen Vorteile der Fertigung hinaus, sind eventuelle Fertigungsformen leichter und kostengünstiger herstellbar, einfacher für eine Serienfertigung konfektionierbar und, wie auch die Teile oder Segmente selbst, einfacher handhabbar.

Eine noch effizientere Fertigung von Teilen des erfindungsgemäßen Rotorblatts ist durch das erfindungsgemäße Verfahren dadurch möglich, dass bevorzugt wenigstens zwei Unterteilungen etwa quer zur Längserstreckung des Rotorblattes zwischen dem Blattwurzelbereich und der Blattspitze zur Bildung von wenigstens drei Segmenten vorgesehen sind.

Eine nächste Weiterbildung des erfindungsgemäßen Verfahrens sieht vor, dass das Rotorblatt im Wesentlichen in eine Unterhalbschale und eine Oberhalbschale unterteilt wird und die Segmentierung pro Halbschale vorgesehen wird.

Nach einer nächsten Weiterbildung des erfindungsgemäßen Verfahrens kann vorgesehen sein, dass (auch) etwa in Längserstreckung des Rotorblattes verlaufende Unterteilungen zur Segmentierung des Rotorblattes vorgesehen sind.

Nach einer anderen Weiterbildung der Erfindung ist vorgesehen, in der Integrationsvorrichtung ein oder mehrere Stege, ein oder mehrere Gurte, ein oder mehrere Rotorblattwurzelteile, Segmente, die anderweitig, insbesondere zeitlich parallel, gefertigt oder vorgefertigt worden sind, und/oder aus Segmenten gebildete Rotorblattschalen miteinander zu verbinden. Dazu sind die Stege, Gurte, Rotorblattwurzelteile und/oder Segmente vorzugsweise zuvor mit einer Kunststofftechnik gefertigt worden.

Grundsätzlich kann für das erfindungsgemäße Verfahren bevorzugt eine Kunststofftechnik als Fertigungstechnik verwendet werden, bei der wenigstens ein Harz und wenigstens eine Faserlage, insbesondere aus Glasfasern und/oder Kohlefasern, verwendet wird. Hierbei kann es sich insbesondere um eine Spritzpresstechnik (Resin Transfer Moulding; RTM), eine Infusionstechnik (Resin Infusion Moulding; RIM), insbesondere eine durch Vakuum unterstütze Infusionstechnik (Vacuum Assisted Resin Infusion; VAR) oder eine ähnliche oder vergleichbare Technik handeln. Es kann aber auch zum Beispiel ganz oder teilweise eine Laminiertechnik verwendet werden.

In der Integrationsvorrichtung können Segmente und/oder (andere) Bauteile miteinander verklebt werden. Bevorzugt ist jedoch vorgesehen, dass in der Integrationsvorrichtung Segmente und/oder (andere) Bauteile mit einer der vorgenannten Kunststofftechniken miteinander verbunden werden, so dass, wie bereits weiter vorn erläutert, zwar aus produktionssteigernden Gründen einzelne Teile gefertigt, jedoch zu einem einheitlichen Rotorblatt integriert werden können, das einem einheitlich in einer einzigen Fertigungsform, die gegebenenfalls aus zwei Halbschalen besteht, hergestellten Rotorblatt nicht nachsteht, insbesondere auch die Segmentierungen des Rotorblattes aus der erfindungsgemäßen Vorproduktion nach ihrer Integration nicht auffällig sind oder stören oder sich auf das fertige Rotorblatt in irgendeiner Weise störend auswirken.

Insbesondere zusätzlich kann vorgesehen sein, dass in der Integrationsvorrichtung Segmente und/oder Bauteile durch Kraft- und/oder Formschlussverbindungen oder eine Kraft- und/oder Formschlussverbindung, insbesondere durch Laschen, Fügen, Schäften, Nut und Federn oder dergleichen, miteinander verbunden werden, vorzugsweise um Verbindungen zusätzlich zu sichern oder nahtloser zu gestalten.

Eine andere Weiterbildung des erfindungsgemäßen Verfahrens zur Fertigung eines Rotorblattes für eine Windenergieanlage, für die auch selbständiger Schutz beansprucht wird, zeichnet sich dadurch aus, dass wenigstens eines der mit wenigstens einem anderen Bauteil zu verbindenden Bauteile besäumt wird. Insbesondere kann zur Besäumung Balsaholz oder ein Balsaholzsandwich verwendet werden. Vorzugsweise wird wenigstens ein Gurt besäumt. Hierdurch werden Übergänge abgemildert und Verbindungen gesichert und Kraftverläufe und Kraftübertragungen, auch in unterschiedlichen Richtungen, verbessert oder gewährleistet, vorzugsweise mit einem Material, das hierfür besonders geeignet ist und wenig zusätzliches Gewicht bringt.

Eine weitere Weiterbildung des erfindungsgemäßen Verfahrens sieht vor, dass beim Einbringen in die Integrationsvorrichtung zwischen zwei miteinander zu verbindenden Bauteilen, insbesondere zwischen zwei Segmenten, zu ihrer Verbindung ein Spalt für die Eingabe wenigstens eines Verbindungsmaterials belassen wird, um auch hierdurch die Verbindung sicherer und nahtloser zu gestalten. Dabei kann vorgesehen sein, dass der Spalt für den Eintritt eines fließfähigen Verbindungsmaterials und für ein festes Material, vorzugsweise ein Fasermaterial, insbesondere eine Einlage daraus, genutzt wird.

Zur Erwärmung, Trocknung und/oder Aushärtung von Bauteilen und/oder Bauteilverbindungen kann vorteilhaft wenigstens eine elektrische Heizeinrichtung, vorzugsweise eine Mikrowelleneinrichtung oder eine Heizdecke, verwendet werden. Es kann auch z. B. Luft oder ein anderes Medium verwendet werden, das den Vorteil hätte, erforderlichenfalls auch für eine Kühlung verwendet werden zu können.

Vorzugsweise ist erfindungsgemäß vorgesehen, dass zunächst die Bauteile ausgehärtet oder vorgehärtet werden, die Bauteile danach in die Integrationsvorrichtung eingegeben werden, dort miteinander verbunden werden und danach die Verbindung und/oder der Verbund der Bauteile getrocknet und/oder ausgehärtet wird.

Ein besonderer Vorteil des erfindungsgemäßen Verfahrens kann darin bestehen, dass zur Fertigung von Bauteilen zeitlich parallel verwendbare Fertigungsformen verwendet werden. Insbesondere könnte vorgesehen sein, dass eine zeitlich parallele Fertigung von Bauteilen durchgeführt wird, bei der die zu fertigenden Bauteile, insbesondere nach ihrer Art, Beschaffenheit und/oder Größe, so konzipiert sind oder werden, dass die Bauteile gemeinsam innerhalb von 24 Stunden für die Integrationsvorrichtung bereitgestellt werden können. Insgesamt könnte damit erreicht werden, dass die Fertigung der Bauteile und deren Integration in der Integrationsvorrichtung so geplant und durchgeführt wird, dass ein oder das Rotorblatt im Wesentlichen innerhalb von 48 Stunden bereitgestellt werden kann.

Eine andere Weiterbildung der Erfindung, für die auch selbständiger Schutz beansprucht wird, zeichnet sich dadurch aus, dass eine Integrationsvorrichtung als Fertigungsform für eine Halbschale eines Rotorblattflügels verwendet wird, wobei die Fertigung vorzugsweise mittels einer vorgenannten Kunststofftechnik erfolgt und wobei wenigstens ein erstes Segment vorgefertigt oder halbvorgefertigt in die Integrationsvorrichtung eingelegt wird und wenigstens ein zweites Segment erst in der Integrationsvorrichtung an dem ersten Segment oder unter Integration des ersten Segmentes gefertigt wird. Mit besonderem Vorteil wird somit in der Integrationsvorrichtung gleichzeitig eine Fertigung und eine Integration vorgenommen. Der Belegungsaufwand der Vorrichtung als Fertigungsform wird dadurch vermindert, dass sie als Integrationsvorrichtung genutzt wird und eine teilweise Fertigung schon vorher oder parallel in einer anderen, kleineren Fertigungsform durchgeführt werden kann. Dennoch entsteht in der Integrationsvorrichtung als Fertigungsform ein integriertes Rotorblatt bzw. eine Halbschale dafür, das bzw. die durch die in der Integrationsvorrichtung erfolgende Konfektionierung mit allen herkömmlichen Vorteilen und hinzukommenden erfindungsgemäßen Vorteilen, technischer und ökonomischer Art, einheitlich gefertigt erscheint.

Vorzugsweise kann eine Bestückung und Belegung erfindungsgemäß so erfolgen, dass in der Integrationsvorrichtung bei der Fertigung der Halbschale des Rotorblattes ein fertiges oder halbfertiges erstes Segment und ein zweites zu fertigendes Segment einander räumlich bei der Belegung der Integrationsvorrichtung abwechseln. Bei der Integration kann das fertige oder halbfertige Segment in die Fertigung des zu fertigenden Segmentes besonders gut eingebunden werden und die Belegung erfolgt in nahezu gewohnter Weise, jedoch deutlich schneller und einfacher.

Insbesondere können erfindungsgemäß auch wenigstens ein Gurt und wenigstens ein Steg vorgefertigt werden und in der Integrationsvorrichtung mit einer Halbschale eines Rotorblattes integriert oder verbunden werden. Dabei kann zudem wenigstens ein Gurt oder ein Steg eine Trennung zwischen zwei Segmenten der Halbschale überbrücken und so für eine weitere, sichere Verbindung und Kraftübertragung sorgen.

Eine andere Weiterbildung der Erfindung bzw. eigenständige Erfindung, für die auch selbständiger Schutz beansprucht wird, zeichnet sich dadurch aus, dass wenigstens eine Gurt-Steg-Baugruppe vorgefertigt und in die Integrationsvorrichtung zur Verbindung mit einer Schale des Rotorblattes gegeben wird. Auch diese erfindungsgemäße Maßnahme macht die Nutzung und Belegung der Integrationsvorrichtung ökonomischer. Dazu kann vorgesehen sein, dass die Halbschale wenigstens teilweise in der Integrationsvorrichtung gefertigt wird, die Integrationsvorrichtung somit auch als Fertigungsform genutzt wird, und dabei die Gurt-Steg-Baugruppe in die Halbschale integriert wird, so dass durch dieses erfindungsgemäße Vorgehen auch die Fertigungsform ökonomischer genutzt wird.

Wenigstens eine Lage, insbesondere Faserlage, kann bei der Fertigung der Halbschale oder zu deren Fertigstellung zur Verbindung der Halbschale mit der Gurt-Steg-Baugruppe verwendet werden. Eine andere Weiterbildung des erfindungsgemäßen Verfahrens sieht vor, dass für die Fertigung der Halbschale unter Einsatz einer Vakuuminfusionstechnik oder einer sonstigen, durch Vakuum unterstützten Kunststofftechnik eine Vakuumabdichtung mit wenigstens einer Folie erfolgt und dass die Gurt-Steg-Baugruppe in die Abdichtung zur Fertigung der Halbschale zu ihrer Verbindung mit der Halbschale mit einbezogen wird.

Dadurch kann auch die Verbindung der Gurt-Steg-Gruppe mit der Schale in der Fertigungstechnik erfolgen und so ein integriertes Rotorblatt bereitstellen. Bevorzugt ist vorgesehen, dass eine im Wesentlichen L-förmige Gurt-Steg-Baugruppe gefertigt wird, in der Weise, dass ein Gurt und ein Steg im Wesentlichen etwa L-förmig zueinander ausgerichtet sind. Dabei kann dann die L-Form mit einer Schale eines Rotorblattes verbunden werden, vorzugsweise derart, dass der Steg aus der Schale aufragt und dass diese L-Form mit einer entsprechenden L-Form einer anderen Schale bei der Verbindung der beiden Schalen miteinander im Wesentlichen eine Kastenform bildet. Schon eine Fertigungsform für die Gurt-Steg-Gruppe kann so konzipiert sein, dass zur Fertigung der L-Form eine Fertigungsform verwendet wird, in der der an der L-Form beteiligte Gurt und der beteiligte Steg im richtigen Winkel zueinander angeordnet und/oder gefertigt werden. Dabei könnte wenigstens der Gurt oder der Steg vorgefertigt in die Fertigungsform eingelegt werden und das andere Teil, vorzugsweise mit Lagen für eine Kunststofftechnik, (daran) gefertigt werden.

Eine weitere Weiterbildung des erfindungsgemäßen Verfahrens bzw. selbstständige Erfindung, für die auch selbständiger Schutz beansprucht wird, zeichnet sich dadurch aus, dass wenigstens ein Bauteil, vorzugsweise wenigstens der Gurt oder der Steg, aus vorgefertigten Teilen, sogenannten Prepregs, gefertigt wird. Die Verwendung sogenannter Prepregs kann die Fertigungszeit mit Vorteil verkürzen, Gerade in der Konzeption des erfindungsgemäßen Verfahrens sind andererseits dadurch keine Qualitätseinbußen zu befürchten.

Eine andere Weiterbildung des erfindungsgemäßen Verfahrens sieht vor, dass wenigstens eine Lage zur Fertigung wenigstens des Gurtes oder des Steges so in die Fertigungsform eingelegt wird, dass sie eine Stoßfuge zwischen den beiden Teilen überbrückt, vorzugsweise umschlingt, derart, dass bei der Fertigung des Gurtes und/oder des Steges eine Verbindung zwischen den Teilen auch durch diese Lage entsteht. Auf diese Weise wird zum Beispiel mit Vorteil ein schon fertiger Teil in die Fertigung eines daran noch anzufertigenden Teils in gewisser Weise formschlüssig eingebunden, was den Zusammenhalt und insbesondere auch die Kräfteübertragung begünstigt.

Zum Beispiel könnte der Steg zur Ausbildung von Verbindungsflanschen für einen Gurt auch im Wesentlichen etwa C-förmig ausgebildet werden.

Die bereits angesprochene Fertigungsform für eine Gurt-Steg-Gruppe könnte vorsehen, dass die Fertigungsform eine im Wesentlichen etwa V-förmige Mulde zur L-förmigen Einbringung von Material aufweist. Insbesondere zur besseren und bequemeren Belegung kann zudem vorgesehen sein, dass die Fertigungsform um eine im Wesentlichen waagerechte Achse schwenkbar ist.

Für ein erfindungsgemäßes Rotorblatt für eine Windenergieanlage, das sich in betriebsbereitem Zustand von einem Blattwurzelbereich zum Anschluss an eine Rotornabe der Windenergieanlage bis zu einer Blattspitze längserstreckt und das für seine Fertigung in wenigstens zwei Segmente eingeteilt ist, wobei wenigstens eine Unterteilung etwa quer zu seiner Längserstreckung zwischen dem Blattwurzelbereich und der Blattspitze vorgesehen ist, und welches sich in eigenständiger Lösung der gestellten Aufgabe dadurch auszeichnet, dass die wenigstens zwei Segmente in einer Integrationsvorrichtung miteinander verbunden sind, wird auch selbständiger Schutz beansprucht.

Die mit dieser erfindungsgemäßen Lösung erreichten Vorteile sind bereits hinreichend im Zusammenhang mit dem erfindungsgemäßen Verfahren erläutert worden.

Vorzugsweise ist erfindungsgemäß vorgesehen, dass wenigstens zwei Unterteilungen etwa quer zur Längserstreckung des Rotorblattes zwischen dem Blattwurzelbereich und der Blattspitze zur Bildung von wenigstens drei Segmenten vorgesehen sind. Bevorzugt ist das Rotorblatt im Wesentlichen in eine Unterhalbschale und eine Oberhalbschale unterteilt und die Segmentierung pro Halbschale vorgesehen.

Erfindungsgemäß kann auch vorgesehen sein, dass wenigstens eine etwa in Längserstreckung des Rotorblattes verlaufende Unterteilung zur Segmentierung des Rotorblattes vorgesehen ist.

Eine erfindungsgemäße Integration von wenigstens zum Teil parallel gefertigten Teilen des erfindungsgemäßen Rotorblattes zu einer Einheit mit gewohnter Qualität erfolgt vorzugsweise dadurch, dass in der Integrationsvorrichtung ein oder mehrere Stege, ein oder mehrere Gurte, Rotorblattwurzelteile, Segmente und/oder aus Segmenten gebildete Rotorblattschalen miteinander verbunden werden.

Bevorzugt sind die Stege, Gurte, Rotorblattwurzelteile und/oder Segmente mit einer Kunststofftechnik gefertigt, wobei vorzugsweise mit der Kunststofftechnik wenigstens ein Bauteil unter Verwendung von wenigstens einem Harz und wenigstens einer Faserlage, insbesondere aus Glasfasern und/oder Kohlefasern, gefertigt ist.

Die Segmente und/oder (andere) Bauteile können zum Beispiel miteinander verklebt sein und/oder bevorzugter durch eine der vorgenannten Kunststofftechniken miteinander verbunden werden.

Alternativ oder zusätzlich können die Segmente und/oder Bauteile durch Kraft- und/oder Formschlussverbindungen oder eine Kraft- und/oder Formschlussverbindung, insbesondere durch Laschen, Fügen, Schäften, Nut und Federn oder dergleichen, miteinander verbunden sein.

Eine andere Weiterbildung der Erfindung bzw. eigenständige Erfindung, für die auch selbständiger Schutz beansprucht wird und die auch schon im Zusammenhang mit dem erfindungsgemäßen Verfahren erläutert worden ist, sieht vor, dass wenigstens ein mit wenigstens einem anderen Bauteil zu verbindendes Bauteil besäumt ist. Diese Besäumung umfasst vorzugsweise Balsaholz oder ein Balsaholzsandwich. Bevorzugt wird ein Gurt besäumt.

Eine nächste Weiterbildung des erfindungsgemäßen Rotorblatts zeichnet sich dadurch aus, dass für eine zeitlich parallele Fertigung von Bauteilen die zu fertigenden Bauteile, insbesondere nach ihrer Art, Beschaffenheit und/oder Größe, so konzipiert sind, dass die Bauteile gemeinsam innerhalb von 24 Stunden für die Integrationsvorrichtung bereitgestellt werden können. Vorzugsweise ist erfindungsgemäß vorgesehen, dass die Segmente so konzipiert sind, dass sie etwa gleich große Flächen haben oder abdecken.

Bei dem erfindungsgemäßen Rotorblatt sind vorzugsweise wenigstens ein Gurt und wenigstens ein Steg vorgefertigt und mit einer Halbschale eines Rotorblattes integriert oder vorverbunden. Zudem könnte wenigstens ein Gurt oder ein Steg eine Trennung zwischen zwei Segmenten der Halbschale überbrücken. Vorzugsweise ist sogar wenigstens eine Gurt-Steg-Baugruppe vorgefertigt und mit einer Halbschale des Rotorblattes vorverbunden. Bei einem Ausführungsbeispiel dazu, kann wenigstens eine Lage, insbesondere Faserlage, bei der Fertigung der Halbschale zur Verbindung der Halbschale mit der Gurt-Steg-Baugruppe verwendet werden.

Das erfindungsgemäße Rotorblatt umfasst nach einer Weiterbildung eine im Wesentlichen L-förmige Gurt-Steg-Baugruppe. Dabei kann die L-Form mit einer Schale eines Rotorblattes verbunden werden, derart, dass der Steg aus der Schale aufragt und dass diese L-Form mit einer entsprechenden L-Form einer anderen Schale bei der Verbindung der beiden Schalen miteinander im Wesentlichen eine Kastenform bildet. Hieraus ergibt sich eine schnelle, präzise und stabile Fertigung und ein entsprechend vorteilhaftes Rotorblatt.

Eine andere Weiterbildung der Erfindung sieht vor, dass wenigstens ein Bauteil, vorzugsweise wenigstens der Gurt oder der Steg, aus vorgefertigten Teilen, sogenannten Prepregs, gefertigt ist, wobei dies bei dem Gurt leichter geschehen kann als bei dem dünnen, vielleicht nur aus einer Faserlage bestehenden Steg.

Dazu kann vorgesehen sein, dass wenigstens eine Lage zur Fertigung wenigstens des Gurtes oder des Steges derart eine Stoßfuge zwischen zwei Teilen überbrückt, vorzugsweise umschlingt, dass eine Verbindung zwischen den Teilen auch durch diese Lage gegeben ist. Zum Beispiel könnte der Steg zur Ausbildung von Verbindungsflanschen im Wesentlichen etwa C-förmig ausgebildet sein.

Für eine Fertigungsform zur Fertigung eines Rotorblattes für eine Windenergieanlage, die sich erfindungsgemäß dadurch auszeichnet, dass eine zur Verbindung wenigstens zweier Segmente oder Bauteile vorgesehene Integrationsvorrichtung als Fertigungsform für eine Halbschale eines Rotorblatts ausgebildet ist, in der die Fertigung vorzugsweise mittels einer vorgenannten Kunststofftechnik erfolgt und in die wenigstens ein erstes Segment vorgefertigt oder halbvorgefertigt einlegbar ist und wenigstens ein zweites Segment erst in der Integrationsvorrichtung an dem ersten Segment oder unter Integration des ersten Segmentes zu fertigen ist, wird ebenfalls selbstständiger Schutz beansprucht. Erfindungsgemäß ergibt sich also eine Fertigungsform, die in vorteilhafter Weise eine Integrationsvorrichtung ist bzw. umfasst und dadurch einen für die Fertigung der Rotorblätter besonders vorteilhaften, quasi hybriden Charakter hat. Ein solche erfindungsgemäße Fertigungsform kann für die Integration eines gesamten Rotorblattes konzipiert und vorgesehen sein, speziell kann eine solche erfindungsgemäße Fertigungsform auch zur integrativen Ausbildung einer Gurt-Steg-Gruppe konzipiert und vorgesehen sein und sich dadurch auszeichnen, dass sie zur Fertigung einer aus einem Gurt und einem Steg gebildeten L-Form vorgesehen ist, in der der an der L-Form beteiligte Gurt und der beteiligte Steg im richtigen Winkel zueinander anzuordnen und/oder zu fertigen sind.

Nach einer Weiterbildung kann diese spezielle Fertigungsform eine im Wesentlichen etwa V-förmige Mulde zur L-förmigen Einbringung von Material aufweisen.

Jede denkbare, erfindungsgemäße Fertigungsform, insbesondere aber die Fertigungsform zur Ausbildung einer Gurt-Steg-Gruppe, kann zu ihrer besseren und bequemeren Verwendung vorzugsweise um eine im Wesentlichen waagerechte Achse schwenkbar sein.

Unter der Formulierung "etwa quer zur Längserstreckung bzw. zu seiner Längserstreckung" wird im Rahmen der Erfindung insbesondere quer zu der Längserstreckung, vorzugsweise im Wesentlichen senkrecht oder senkrecht zur Längserstreckung verstanden.

Insoweit im Rahmen dieser Anmeldung ein Begriff in Klammern gesetzt wurde, wird der Inhalt der Klammer als insbesondere bevorzugte Variante verstanden.

Unter dem Begriff "halbvorgefertigt" wird im Rahmen der Erfindung insbesondere teilweise vorgefertigt verstanden. Hierbei kann dieses insbesondere so verstanden werden, dass im Wesentlichen die Hälfte der Fertigungszeit bzw. des Fertigungsaufwandes insbesondere im Hinblick auf die verbaute Menge aufgewendet wurde.

Unter einem "richtigen Winkel" wird im Rahmen der Erfindung insbesondere ein vorbestimmbarer bzw. vorgebbarer oder vorgegebener Winkel verstanden.

Ausführungsbeispiele, aus denen sich weitere erfinderische Merkmale ergeben können, auf die die Erfindung in ihrem Umfang aber nicht beschränkt ist, sind in der Zeichnung dargestellt. Es zeigen schematisch:
- Fig. 1: eine Draufsicht in eine Halbschale eines Rotorblatts,
- Fig. 2: einen Schnitt durch einen Nahtbereich zwischen zwei Segmenten einer Halbschale eines Rotorblatts in einem ersten Ausführungsbeispiel,
- Fig. 3: einen Schnitt durch einen Nahtbereich zwischen zwei Segmenten einer Halbschale eines Rotorblatts in einem zweiten Ausführungsbeispiel,
- Fig. 4: einen Querschnitt einer Fertigungsform für eine Gurt-Steg-Gruppe,
- Fig. 5: den Querschnitt der Fertigungsform gemäß Fig. 4 mit eingelegten Bauteilen,
- Fig. 6: einen Ausschnitt aus dem Querschnitt gemäß Fig. 5 mit anderen Beispielen von Bauteilen,
- Fig. 7: zwei erfindungsgemäße Gurt-Steg-Gruppen vor ihrer Verbindung,
- Fig. 8: einen Querschnitt durch einen Teil einer zu fertigenden Halbschale eines Rotorblatts bei Einbindung einer Gurt-Steg-Gruppe und
- Fig. 9: einen Querschnitt einer Fertigungsform für eine Halbschale eines Rotorblatts mit Belegung gemäß Fig. 8.

Es sei zunächst vorausgeschickt, dass in den Figuren der Zeichnung nur prinzipielle Ausführungsbeispiele zur Erfindung gezeigt sind, bei denen vielfältige Variationen im Rahmen der Erfindung möglich sind. Zudem ist keine der Figuren maßstabsgetreu oder überhaupt maßgetreu gezeichnet. Die dargestellten Ausführungsbeispiele sollen nur als prinzipielle Möglichkeiten schematisch skizziert sein.

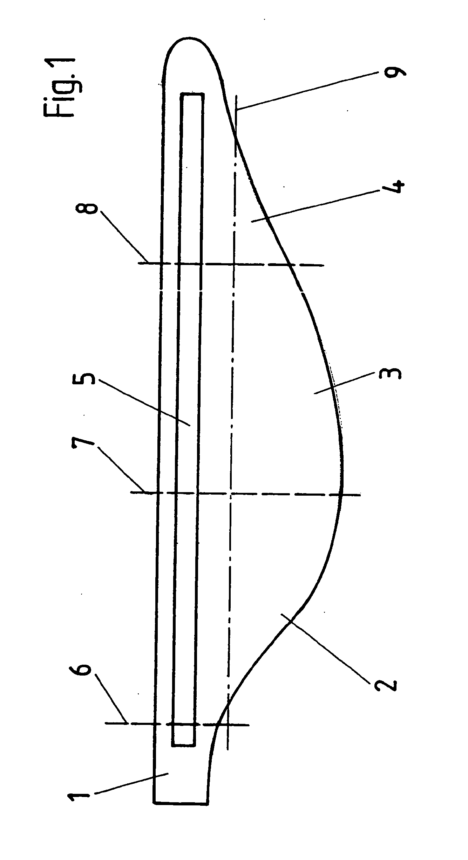

Fig. 1 zeigt eine Draufsicht in eine Halbschale eines Rotorblatts. Erfindungsgemäß ist die gezeigte Halbschale in mehrere Segmente 1 bis 4 unterteilt. Von diesen Segmenten 1 bis 4 können jeweils alle oder einige im Wesentlichen zeitlich parallel zueinander gefertigt oder vorgefertigt werden und dann in der in Fig. 1 dargestellten Weise zu einer Halbschale eines Rotorblatts integriert werden, was in einer entsprechenden Integrationsvorrichtung geschehen kann. Diese Integrationsvorrichtung kann aber zudem auch als Fertigungsform genutzt werden, indem einige der Segmente erst in dieser Fertigungsform gefertigt werden und/oder die Halbschale mit teils vorgefertigten und teils noch zu fertigenden Segmenten endgefertigt wird.

Vorzugsweise ist erfindungsgemäß vorgesehen, dass ein Segment durch eine sogenannte Rotorblattwurzel 1 gebildet wird und die übrige Halbschale in drei Segmente 2 bis 4 unterteilt ist. Die Segmente 2 bis 4 sind durch Querteilungen 6 bis 8 so konzipiert, dass sie etwa gleich groß sind und etwa gleich schnell gefertigt werden können. Diese Segmente 2 bis 4 könnten zum Beispiel durch eine Längsteilung 9 aber auch in noch weitere Segmente unterteilt sein.

Über die Segmente 1 bis 4 verläuft vorzugsweise ein ungeteilter, diese Segmente verbindender Gurt 5 der auch und besonders zur Kräfteübertragung bei der Belastung eines an einer Windenergieanlage angeordneten Rotorblattes dient. Statt eines Gurtes 5 können gegebenenfalls auch zwei oder mehr zueinander im Wesentlichen parallel, in einem Abstand zueinander verlaufende Gurte vorgesehen sein, also beispielsweise ein sogenannter Vorderkantengurt und ein Hinterkantengurt, bezogen auf die Kanten des Rotorblatts, denen sie jeweils näher sind.

Ein vollständiges Rotorblatt wird dadurch als Hohlkörper ausgebildet, dass auf eine Halbschale wie etwa in Fig. 1 gezeigt eine zweite, spiegelverkehrte Halbschale aufgesetzt wird und die beiden Halbschalen miteinander verbunden werden. In diesen Hohlkörper kann beispielsweise heiße Luft eingeleitet werden, um das Rotorblatt noch weiter zu tempern und vollständig auszuhärten. Die Halbschalen werden vorzugsweise mittels einer Kunststofftechnik ausgebildet, indem zum Beispiel Glasfaser- und/oder Kohlefaserlagen in einer Fertigungsform, die die dreidimensionale Formgebung der Halbschale vorgibt, eingelegt oder eingeschichtet werden und dann insgesamt mit einer Vakuumfolie abgedeckt werden. Diese Vakuumfolie wird ringsherum entlang der Ränder auf der Fertigungsform vakuumdicht abgedichtet, zum Beispiel mit gummiartigen Verklebungslinien oder beidseitigen Klebebändern. Damit bildet dann diese Vakuumfolie die flexible Gegenform zur festen Fertigungsform. Bei der sogenannten Vakuuminfusionstechnik wird dann durch Luftentzug zwischen der Vakuumfolie und der Fertigungsform ein Unterdruck, ein "Vakuum", erzeugt. Durch diesen Unterdruck werden die Faserlagen aufeinandergepresst und es wird aus einem Reservoir ein Harz unter der Vakuumfolie eingesogen, dass sich über die ganze Form gleichmäßig verteilt und die Faserlagen nach seinem Aushärten fest miteinander zu einem festen Kunststoffformteil, der Halbschale, verbindet. Eine gleichmäßige Verteilung des Harzes kann dadurch erreicht werden, dass mehrere Zuleitungen für das Harz gelegt werden und geeignete Netz- oder Gitterlagen mit in die Form eingelegt werden, die die Verteilung und das flächige Verfließen des Harzes begünstigen und leiten.

Ein bevorzugtes Ausführungsbeispiel des erfindungsgemäßen Verfahrens sieht in Anbetracht der Fig. 1 vor, die Segmente 1 und 3 in separaten, handlicheren Fertigungsformen vorzufertigen und dann an der in Fig. 1 gezeigten richtigen Position in die Fertigungs- und Integrationsvorrichtung für die gesamte Halbschale einzubringen. Die gesamte Halbschale kann zum Beispiel über 60 Meter lang sein, während die Segmente entsprechend kürzer sind und somit auch die für sie notwendigen Fertigungsformen. Die Beanspruchung der Fertigungsform für die gesamte Halbschale kann dadurch so wenig und so kurz wie möglich erfindungsgemäß in Anspruch genommen werden.

Die Segmente 2 und 4 werden vorzugsweise erst in der Fertigungsform für die gesamte Halbschale gefertigt. Dafür werden, wie geschildert, entsprechende Faserlagen in die Fertigungsform eingelegt. Die vorgefertigten Segmente 1 und 3 werden so in die Fertigungsform eingebracht, dass die entsprechenden Lücken für die noch nicht fertigen Segmente 2 und 4 in der Fertigungsform bleiben, für die aber die Faserlagen in der Fertigungsform vorgesehen sind. Die Segmente 1 und 3 und die Faserlagen werden so in die Fertigungsform eingelegt, dass die Segmente 1 und 3 in die Faserlagen der Segmente 2 und 4 integriert sind und bei und nach der Fertigung der Segmente 2 und 4 mit diesen verbunden sind, und zwar zu einer einstückigen Halbschale, die im Prinzip wie gewohnt aussieht und insbesondere belastbar ist. Dafür wird die Vakuumfolie für die Fertigung der Segmente 2 und 4 zum Beispiel unter Einbeziehung aller Segmente über die gesamte Länge der Fertigungsform gelegt und abgedichtet und die Fertigungsform mit Harz geflutet.

Der Gurt 5 kann später auf die im Prinzip fertige Halbschale aufgebracht und mit dieser z. B. verklebt werden, aber auch er könnte erfindungsgemäß mit in die Halbschale integriert werden. Auf den Gurt wird hochkant noch mindestens ein Steg aufgesetzt, der dem Verlauf des Gurtes folgt und im fertigen Rotorblatt die beiden Halbschalen bzw. deren Gurte miteinander verbindet. Erfindungsgemäß wird vorzugsweise eine Gurt-Steg-Gruppe vorgefertigt und dann in die Halbschale in der Fertigungs- und Integrationsvorrichtung integriert.

Besonderes Augenmerk kann erfindungsgemäß auf den Nahtbereich zwischen zwei Segmenten gelegt werden.

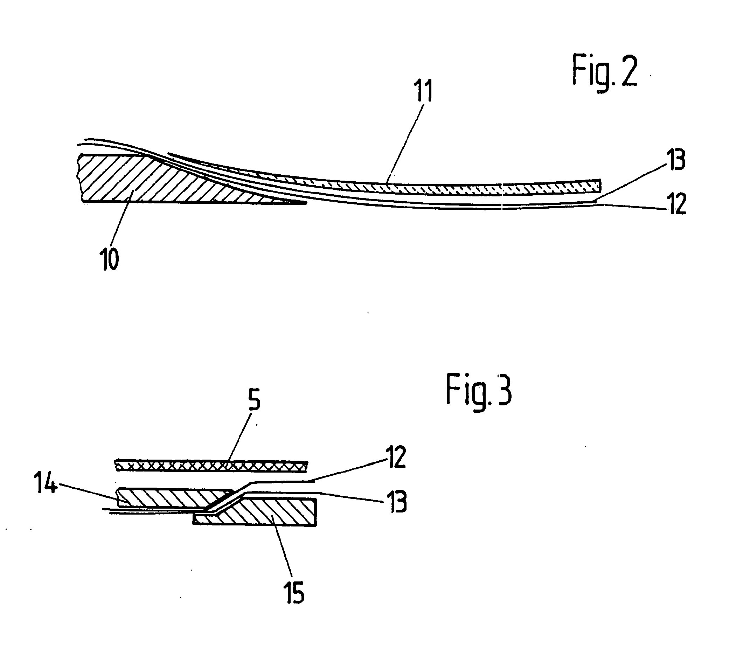

Fig. 2 zeigt im Schnitt eine erste beispielhafte Ausführungsmöglichkeit für einen solchen Nahtbereich. Diese Möglichkeiten können nicht nur für Segmente gelten, sondern für zu verbindende Bauteile im Allgemeinen. Eines dieser Teile ist in Fig. 2 mit 10 bezeichnet. Hierbei könnte es sich zum Beispiel um ein fertiges Segment 3 handeln. Das daran anschließende Teil soll noch daran gefertigt werden, zum Beispiel ein Segment 4. Für dessen Fertigung sind im Wesentlichen die im Vorhergehenden erwähnten Faserlagen 12, 13 vorgesehen. Der Schichtaufbau kann natürlich wesentlich komplizierter sein als hier angedeutet und insbesondere können mehr oder weniger Faserlagen verwendet werden. Diese Faserlagen müssen auch nicht durchlaufend sein, sondern können zum Beispiel einander überlappende oder auch nicht überlappende Abschnitte sein. Vorzugsweise enthalten sie orientierte Fasern, die zum Beispiel zu einem größeren Prozentsatz in Längsrichtung der Halbschale verlaufen, um insbesondere große Belastbarkeit, Biegbarkeit und Bruchfestigkeit des Rotorblattes zu gewährleisten.

Bei der Fertigung des noch zu fertigenden Bauteils, zum Beispiel des Segments 4, können zusätzlich oder unter Umständen auch alternativ Fertigteile, sogenannte Prepregs 11, oder auch Schaumkerne oder dergleichen verwendet werden, um zum Beispiel die Belegung der Fertigungsform und damit die Fertigung zu beschleunigen und durch Zulieferungen die Arbeiten im eigenen Hause zu beschränken.

Fig. 3 zeigt demgegenüber im Schnitt eine Möglichkeit der Verbindung zweier Bauteile 14, 15 oder Segmente, die beide schon vorgefertigt sind. Es können dazu Formschlussverbindungen vorgesehen sein und zusätzlich Verbindungs-Faserlagen 12, 13 verwendet werden. Darüber könnte zur weiteren Verbindung insbesondere der durchlaufende Gurt 5 vorgesehen sein oder auch ein anderes geeignetes Teil.

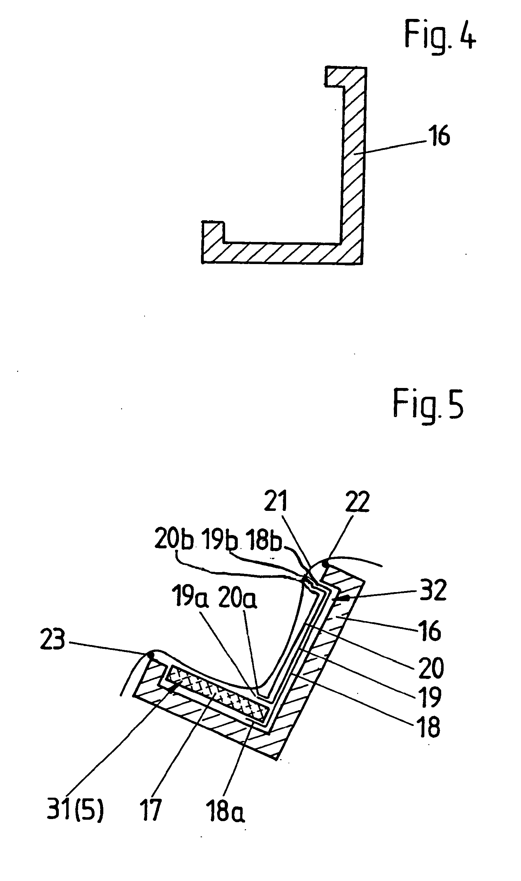

Fig. 4 zeigt im Querschnitt ein Ausführungsbeispiel einer erfindungsgemäßen Fertigungsform 16 für eine erfindungsgemäße Gurt-Steg-Gruppe, bei der ein Gurt und ein Steg zunächst miteinander eine L-Form bilden sollen. Entsprechend ist auch schon die feste Fertigungsform vorgegeben.

Fig. 5 zeigt eine Möglichkeit, die genannte Gurt-Steg-Gruppe in der Fertigungsform 16 zu fertigen. Zur bequemeren Belegung der Fertigungsform 16 ist diese um eine horizontale Achse schwenkbar oder kippbar ausgebildet.

Wie auch bei der Halbschale im Zusammenhang mit Fig. 1 schon geschildert, kann auch hier eines der Bauteile schon vorgefertigt sein, während das andere Teil erst in der Fertigungsform 16 gefertigt wird und mit dem bereits fertigen Teil integriert wird.

Im vorliegend gezeigten Beispiel der Fig. 5 ist der Gurt 31 oder 5 im Prinzip schon fertig und liegt als ein Teil 17 vor. Der Steg 32 wird erst aus Lagen 18, 19, 20 (Anzahl wieder variierbar) gefertigt. Diese Lagen sind so eingelegt, dass sie das fertige Teil 17 teilweise umschlingen und dadurch in die Fertigung des noch zu fertigenden Steges 32 einbeziehen. Dazu zeigen die eingelegten Lagen insbesondere Flanschabwinkelungen 18a, 19a, 20a. Auch an der anderen Seite des zu fertigenden Steges bleiben derartige Abwinklungen 18b, 19b, 20b vorzugsweise überstehen, um den Steg 32 später besser mit dem Gurt 31 der anderen Halbschale verbinden zu können. Der Steg 32 erhält dadurch im Prinzip eine Art C-Form. Die ganze Fertigungsform wird schließlich mit einer Vakuumfolie 21 abgedeckt, die mit Klebelinien 22, 23 gegenüber der Fertigungsform 16 vakuumdicht abgedichtet wird.

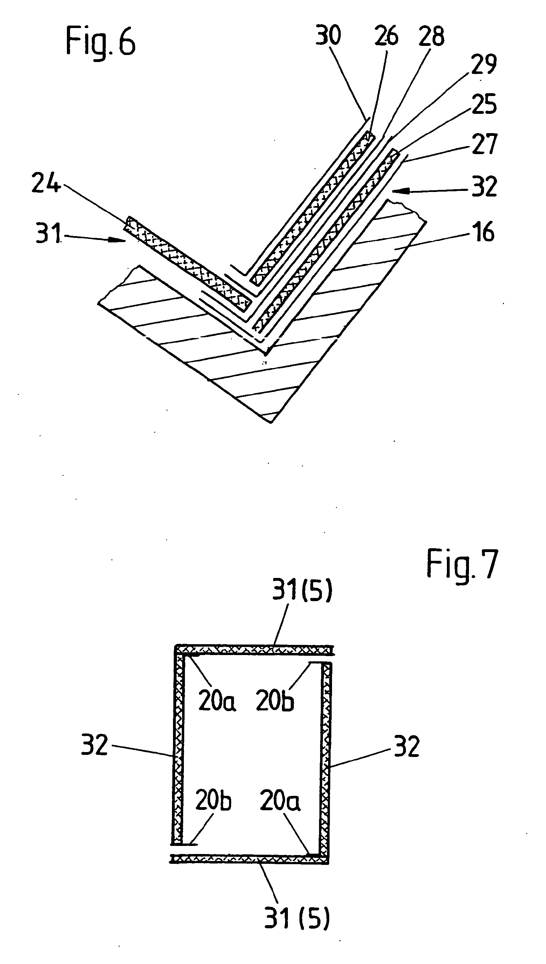

Fig. 6 zeigt im Schnitt noch einmal einen Ausschnitt aus einer Fertigungsform 16 mit einer etwas anderen Belegung. Der Gurt 31 kann hier wieder schon im Prinzip fertig sein und als fertiges Teil oder Prepreg 24 vorliegen. Der Steg 32 wird diesmal aber aus Lagen 27, 28, 29, 30 und aus Prepregs 25, 26 gefertigt.

Fig. 7 zeigt im Schnitt die mögliche Verbindung zweier Gurt-Steg-Gruppen zu einer Art Kastenform für zwei Halbschalen eines Rotorblattes mit den Bezugszahlen aus Fig. 5.

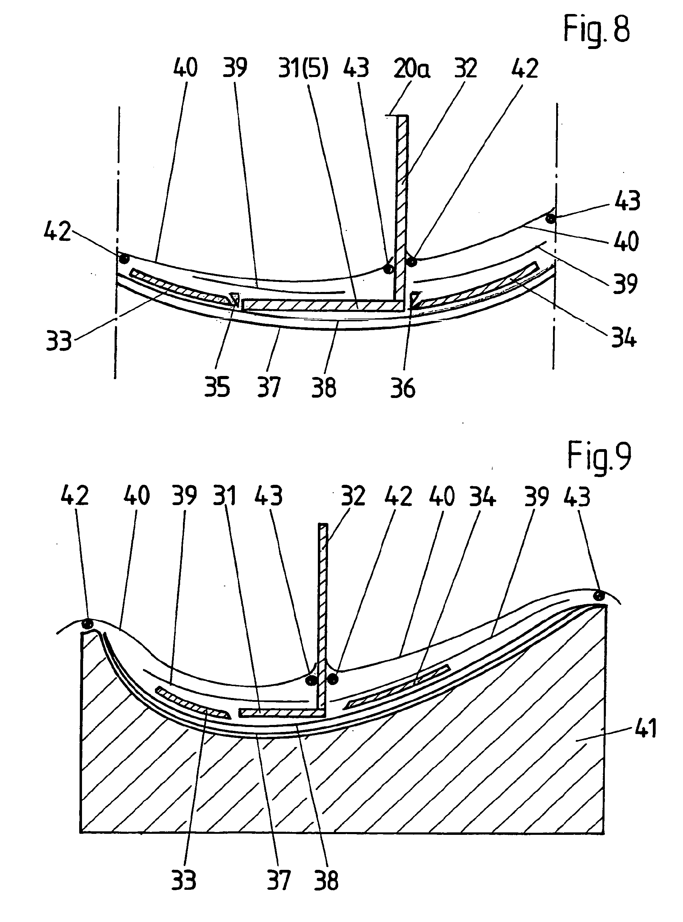

Fig. 8 zeigt im Querschnitt einen Ausschnitt einer Halbschale eines Rotorblattes bei ihrer erfindungsgemäßen Fertigung. Der Ausschnitt ist links und rechts der Darstellung mit strichpunktierten Linien begrenzt. Die feste Fertigungsform für die Halbschale ist in Fig. 8 nicht gezeigt.

Wie bereits weiter vorn geschildert, können zur Fertigung der Halbschale Faserlagen 37, 38 verwendet werden. Auf diese Faserlagen 37, 38 kann erfindungsgemäß eine fertige Gurt-Steg-Gruppe 31, 32 zu deren Integration in die Halbschale aufgesetzt werden. Zusätzlich könnten Prepregs 33, 34 Verwendung finden. Außerdem können Naht übergreifende Verbindungslagen 39 vorgesehen sein. Schließlich können Spalte oder Zwischenräume mit zum Beispiel Teilen 35, 36 aus Schaum (-kernen) oder Balsaholz verfüllt werden. Insbesondere mit Balsaholz kann erfindungsgemäß der Gurt 31 (5) auch besäumt werden, bevor er aufgesetzt oder aufgelegt wird.

Schließlich wird das Ganze mit Vakuumfolien 40 abgedeckt, die an ihren Rändern vakuumdicht mit Klebelinien 42, 43, zum Beispiel auch mit einer Art doppelseitigem Klebeband, abgedichtet sind, und zwar hier erfindungsgemäß so, dass nur der Steg 32, gegen den auch abgedichtet worden ist, teilweise herausragt. Die Vakuumabdichtungen 42, 43 an den Stegen könnten an der Gurt-Steg-Gruppe bereits angeordnet werden, eventuell auch schon mit den Vakuumfolien 40, bevor diese Baugruppe in die Integrationsvorrichtung und auf die Halbschale gesetzt wird, um zu vermeiden, dass das Halbschalenmaterial womöglich betreten werden muss, um die Vakuumfolien 40 an dem aufragenden Steg zu befestigen. Es könnte auch daran gedacht werden, auf die Vakuumabdichtungen 42, 43 am Steg 32 ganz zu verzichten und die Vakuumfolie 40 ungeteilt ganz über den Steg 32 herüberzuführen.

Fig. 9 zeigt noch einmal im Wesentlichen eine ähnliche Darstellung wie Fig. 8 mit denselben Bezugszahlen, jedoch diesmal mit der festen Fertigungsform 41 als Unterbau und über die gesamte Breite dieser Fertigungsform 41. An dieser Stelle sei noch einmal daran erinnert, dass bei den Darstellungen keine Maßstabstreue erzielt wird, was insbesondere im Vergleich der Fig. 8 und 9 miteinander auch deutlich wird.

Zum Abschluss sollen noch einmal einige Merkmale und Vorteile der Erfindung hervorgehoben werden. Auch diese Hervorhebung oder Wiederholung soll aber keine Einschränkung des Umfanges der Erfindung bedeuten oder bewirken.

Zunächst einmal kann der Erfindung der Gedanke zugrunde gelegt werden, einzelne Segmente eines Rotorblattes zu fertigen, die jeweils nicht die gesamte Blattlänge aufweisen. Dies kann den Einsatz beteiligter Fertigungsformen zu optimieren helfen und die Produktionszeit verkürzen, die Produktion also insgesamt produktiver machen. Insbesondere kann eine Serienfertigung erzielt werden, bei der die Segmente für ein Rotorblatt innerhalb von 24 Stunden gefertigt werden können und aus den Segmenten und übrigen Bauteilen des Rotorblattes das Rotorblatt in weiteren 24 Stunden konfektioniert werden kann. Das Rotorblatt selbst kann also insgesamt serienreif und mit gleichbleibender Qualität innerhalb von insgesamt 48 Stunden gefertigt werden, und zwar auch Rotorblätter, die länger als 60 Meter sind. Derartige Blätter stellen nämlich eine fertigungstechnische Herausforderung dar, weil sie nicht nur so lang sind, sondern entsprechend auch eine größere projizierte Fläche von zum Beispiel etwa 190 Quadratmeter aufweisen und auch eine größere Masse, von zum Beispiel etwa 21 Tonnen.

Es werden also zum Beispiel Segmente (Blattschalen) derart geteilt konstruiert, dass diese innerhalb des genannten 1. Fertigungsschrittes gefertigt werden können. In dem 2. Fertigungsschritt könnten alle Einzelteile besäumt und für ihre Integration vorbereitet werden, welche dann in einer separaten Integrationsvorrichtung, zum Beispiel mit einem schnell abbindenden Klebstoff erfolgt. Bei einem Rotorblatt von etwa 60 bis 65 Meter Länge könnten vorzugsweise 2 bis 3 Segmente oder Blattschalen für eine komplette Halbschale vorgesehen werden.

Für die Fertigung der Segmente und übrigen Bauteile kommen verschiedene Kunststofftechniken in Betracht, insbesondere auch das Vakuuminfusionsverfahren.

In Nahtstellenbereichen, insbesondere zwischen Segmenten, kann ein zusätzlich zu Faserlagen verwendeter Sandwichschaum ausgespart werden und eine Innenlage und eine Außenlage der Segmente könnten über eine Schäftung, zum Beispiel in einem Stützstoff, zusammengeführt werden. Die eigentliche Verbindung kann dann durch eine Verklebung erfolgen, für die ein Rezess in wenigstens einem der Segmente vorgesehen werden könnte. Eine andere Alternative bestünde zum Beispiel darin, die Segmente auf Stoß zusammenzuführen und dann die Nahtstelle überzulaminieren. Es kann aber zum Beispiel auch vorgesehen sein, eine Innenlage, eine Außenlage und einen eventuellen Stützstoff in Stufen enden zu lassen und ein vorgefertigtes Teil an diese Trennstelle zu kleben, um so die Verbindung zwischen Segmenten herzustellen. Eine weitere Möglichkeit könnte darin bestehen, an Trennstellen einen L-förmigen Flansch vorzusehen, in den ein Innenlaminat und ein Außenlaminat münden und auf dem ein Stützstoff direkt anschließt. Die Segmente werden dann direkt mit Hilfe dieses Flansches verklebt. Eventuell ist eine Gelegelage von außen aufzubringen, um die Schälbelastung der Verbindung zu reduzieren.

Allerdings könnte die Fertigung auch insgesamt mit klassischem Handlaminieren erfolgen oder zum Beispiel mit Resin Transfer Moulding oder anderen Kunststofftechniken. Bei der Nutzung des Resin Transfer Moulding sollte zwischen ausgehärteten Teilen als Fügepartner für deren Verbindung ein Spalt von etwa 1 bis 3 Millimetern verbleiben, in den ein Medium, z. B. ein Gewebe, ein Flies oder ein Gelege, gelegt werden könnte, das einen guten Harzdurchfluss gewährleistet. Dadurch könnten Unebenheiten in den Oberflächen der Fügepartner ausgeglichen werden und man erhielte eine lunkerfreie Verklebung.

Verklebungen könnten mittels lokalen Erwärmens, zum Beispiel mit Heizdecken oder Mikrowellen, schnell ausgehärtet werden, bevor die Halbschalen miteinander verklebt werden. Eine erfindungsgemäße Halbschale könnte zum Beispiel bestehen aus je mindestens einem Haupt-, Vorderkanten- und/oder Hinterkantengurt, mindestens zwei Segmenten der Schale und einem Wurzelstück mit einem eventuellen Blattanschluss. Diese Einzelteile können durch quer zur Längserstreckung des Rotorblattes verlaufende Teilungen konzipiert werden, deren Positionen zum Beispiel als relativ zur Gesamtlänge L angegeben werden könnten, die nach dem Wurzeleinleger für die gesamte eigentliche Schale bei 0,0 L beginnen könnte. Das erste Segment könnte dann z. B. von 0,0 L bis etwa 0,23 L reichen, das zweite Segment von etwa 0,23 L bis etwa 0,5 L und das dritte Segment von etwa 0,5 L bis etwa 1,0 L. Dabei könnten dann das erste Segment und das dritte Segment jeweils etwa 30% der projizierten Fläche des Rotorblattes aufweisen und das zweite Segment etwa 40%.

Für alle diese Einzelteile könnten eigene und einzelne Fertigungsformen existieren, die ähnlich wie nach dem Prinzip von Halbschalenformen ausgebildet sein könnten. Zu diesen Einzelfertigungsformen gibt es eine zusätzliche Integrationsvorrichtung, in der die Einzelteile zueinander positioniert werden könnten und miteinander integriert und verbunden werden können, die aber zusätzlich oder alternativ auch als eine Fertigungsform für die Halbschale genutzt werden kann, insbesondere zur Nachfertigung von Bereichen der Halbschale, für die noch keine Einzelteile vorliegen. Besonders vorteilhaft kann diese Fertigung mit der Integration und Verbindung von Einzelteilen kombiniert werden. Insbesondere könnten der Wurzel- oder Flanscheinleger und ein mittleres Segment der Halbschale vorgefertigt werden und ein erstes und ein drittes Segment in der Integrationsvorrichtung, die dabei dann eine Hauptform bildet, bei der Integration nachgefertigt werden.

Die erfindungsgemäß gefertigten Einzelteile können auch einzeln vor ihrer Integration einer Qualitätsprüfung unterzogen werden, so dass auch eventueller Ausschuss erfindungsgemäß begrenzter bleibt.

Das zusammengefügte Rotorblatt könnte auch noch in einer separaten Temperkammer zu Ende ausgehärtet werden.

Erfindungsgemäß kann insbesondere auch vorgesehen sein, Gurt-Steg-Gruppen vorzufertigen. Eine solche Gruppe kann in der saugseitigen Halbschale und in der druckseitigen Halbschale in die jeweilige Halbschale integriert werden und beim Verbinden der beiden Halbschalen miteinander werden dann auch vorzugsweise die beiden Gruppen zu einer Kastenform miteinander verbunden. Erfindungsgemäß kann eine integrierte Halbschale ohne Dickschichtklebung entstehen.

Die erfindungsgemäße Gurt-Steg-Gruppe wird vorzugsweise derart gefertigt, dass jeweils eine integrale Baugruppe mit einem Gurt und einem Steg entsteht. Dazu wird vorzugsweise eine im Wesentlichen L-förmige Form benötigt, deren eine Seite von der Blattschalenoberfläche abgenommen ist und die Gurtlagen aufnimmt und deren andere Seite die im Wesentlichen ebene Steggeometrie darstellt. Die Fertigungsform wird vorzugsweise drehbar gelagert, so dass entweder die Gurtseite waagerecht steht oder die Stegseite waagerecht steht oder eine dazwischen liegende Position eingenommen wird, die für das Einlegen und/oder Infusionieren besonders vorteilhaft ist. Zudem könnte die Fertigungsform zur Erleichterung des Entformens teilbar ausgeführt sein.

Vorzugsweise werden als erstes die Gurtlagen in die Fertigungsform eingelegt und zum Beispiel mit Gitterklebeband fixiert. Dann werden die Lagen für den Steg eingelegt und so mit den Gurtlagen überlappt, dass sich eine im Wesentlichen C-förmige Stegform ergibt. Der Gurt kann auch aus Prepreg - Material hergestellt werden. An diesem wird der Steg mit Kunststofftechnik gefertigt. Da das Prepreg - Material etwas klebrig ist, sind sogar für eine Positionierung keine weiteren Fixiermittel erforderlich. Es kann für einen Gurt auch dickeres Prepreg - Material verwendet werden. Die Faserflächengewichte derartigen Materials könnten vorteilhaft größer als etwa 1000 Gramm pro Quadratmeter sein, eventuell sogar größer als 2000 Gramm pro Quadratmeter.

Bei der Verklebung der saugseitigen Halbschale mit der druckseitigen Halbschale zu einem Rotorblatt können erfindungsgemäß auch die Gurt-Steg-Gruppen dieser Seiten miteinander verklebt werden, vorzugsweise zu einer Kastenform und vorzugsweise mit Dickschichtverklebungen.

Durch das erfindungsgemäße Fertigungskonzept kann die Fertigungsfrequenz deutlich gesteigert werden, da wesentliche Teile außerhalb der Hauptform vorgefertigt werden können, beispielsweise auch parallel, z. B. mit dem Einsatz zweier Teams. Vorzugsweise entfällt auch der Schritt des Aushärtens und Einklebens der Stege, der pro Rotorblatt leicht allein mehr als 3 Stunden erfordern kann. Dadurch steigt die Wirtschaftlichkeit der Fertigung signifikant.

Bei der Infusion von Gurten besteht die Gefahr der Ausbildung von Wellen, insbesondere bei einer zu schnellen und unkontrollierten Aushärtung. Dies kann erfindungsgemäß durch Verwendung von Prepregs verhindert werden, was gleichzeitig auch hier den Fertigungsschritt beschleunigt. Die Verwendung von dicken Prepregs, eventuell auch in den Segmenten, reduziert weiter die Einlegezeit, ohne die Kosten des Materials gravierend zu verändern. Auch die Festigkeitseigenschaften des Rotorblatts verändern sich dadurch nicht.

Zudem hat sich erfindungsgemäß gezeigt, dass sich mit Kunststofftechnik noch nicht ausgehärtete, eventuell aber durchaus vorgehärtete oder getemperte Prepregs oder entsprechend vorgefertigte Bauteile mit noch nicht ausgehärtetem Infusionsmaterial an Trennflächen gut und sicher verbinden lassen, mindestens so gut wie mit Klebern, da sich an den Trennflächen die Harze leicht verbinden. Im Vergleich zum Kleben verringert sich dabei das Prozessrisiko. Die Kosten können reduziert werden und Verklebungsfehler, wie zum Beispiel Lunker, zu dicke Klebeschichten, Versprödungen oder Ähnliches fallen weg.

Insbesondere sind folgende Ausführungsbeispiele im Rahmen der Offenbarung der vorliegenden Patentanmeldung beschrieben:
1. Verfahren zur Fertigung eines Rotorblattes für eine Windenergieanlage, das sich in betriebsbereitem Zustand von einem Blattwurzelbereich zum Anschluss an eine Rotornabe der Windenergieanlage bis zu einer Blattspitze längserstreckt und das für seine Fertigung in wenigstens zwei Segmente eingeteilt ist, wobei wenigstens eine Unterteilung etwa quer zu seiner Längserstreckung zwischen dem Blattwurzelbereich und der Blattspitze vorgesehen ist, dadurch gekennzeichnet, dass die wenigstens zwei Segmente in einer Integrationsvorrichtung miteinander verbunden werden.
2. Verfahren nach Ausführungsbeispiel 1, dadurch gekennzeichnet, dass wenigstens zwei Unterteilungen etwa quer zur Längserstreckung des Rotorblattes zwischen dem Blattwurzelbereich und der Blattspitze zur Bildung von wenigstens drei Segmenten vorgesehen sind.
3. Verfahren nach Ausführungsbeispiel 1 oder 2, dadurch gekennzeichnet, dass das Rotorblatt im Wesentlichen in eine Unterhalbschale und eine Oberhalbschale unterteilt wird und die Segmentierung pro Halbschale vorgesehen wird.
4. Verfahren nach einem der vorhergehenden Ausführungsbeispiele, dadurch gekennzeichnet, dass wenigstens eine etwa in Längserstreckung des Rotorblattes verlaufende Unterteilung zur Segmentierung des Rotorblattes vorgesehen ist.
5. Verfahren nach einem der vorhergehenden Ausführungsbeispiele, dadurch gekennzeichnet, dass in der Integrationsvorrichtung ein oder mehrere Stege, ein oder mehrere Gurte, ein oder mehrere Rotorblattwurzelteile, Segmente und/oder aus Segmenten gebildete Rotorblattschalen miteinander verbunden werden.
6. Verfahren nach Ausführungsbeispiel 5, dadurch gekennzeichnet, dass die Stege, Gurte, Rotorblattwurzelteile und/oder Segmente mit einer Kunststofftechnik gefertigt werden.
7. Verfahren nach Ausführungsbeispiel 6, dadurch gekennzeichnet, dass bei der Kunststofftechnik wenigstens ein Harz und wenigstens eine Faserlage, insbesondere aus Glasfasern und/oder Kohlefasern, verwendet wird.
8. Verfahren nach Ausführungsbeispiel 7, dadurch gekennzeichnet, dass eine Spritzpresstechnik (Resin Transfer Moulding; RTM) verwendet wird.
9. Verfahren nach Ausführungsbeispiel 7 oder 8, dadurch gekennzeichnet, dass eine Infusionstechnik (Resin Infusion Moulding; RIM) verwendet wird, insbesondere eine durch Vakuum unterstütze Infusionstechnik (Vacuum Assisted Resin Infusion; VAR).
10. Verfahren nach Ausführungsbeispiel 7, 8 oder 9, dadurch gekennzeichnet, dass eine Laminiertechnik verwendet wird.
11. Verfahren nach einem der vorhergehenden Ausführungsbeispiele, dadurch gekennzeichnet, dass in der Integrationsvorrichtung Segmente und/oder (andere) Bauteile miteinander verklebt werden.
12. Verfahren nach einem der vorhergehenden Ausführungsbeispiele, dadurch gekennzeichnet, dass in der Integrationsvorrichtung Segmente und/oder (andere) Bauteile mit einer der vorgenannten Kunststofftechniken miteinander verbunden werden.
13. Verfahren nach einem der vorhergehenden Ausführungsbeispiele, dadurch gekennzeichnet, dass in der Integrationsvorrichtung Segmente und/oder Bauteile durch Kraft- und/oder Formschlussverbindungen, insbesondere durch Laschen, Fügen, Schäften, Nut und Federn oder dergleichen, miteinander verbunden werden.
14. Verfahren zur Fertigung eines Rotorblattes für eine Windenergieanlage, vorzugsweise nach einem der vorhergehenden Ausführungsbeispiele, dadurch gekennzeichnet, dass wenigstens ein mit wenigstens einem anderen Bauteil zu verbindendes Bauteil besäumt wird.
15. Verfahren nach Ausführungsbeispiel 14, dadurch gekennzeichnet, dass zur Besäumung Balsaholz oder ein Balsaholzsandwich verwendet wird.
16. Verfahren nach Ausführungsbeispiel 14 oder 15, dadurch gekennzeichnet, dass ein Gurt besäumt wird.
17. Verfahren nach einem der vorhergehenden Ausführungsbeispiele, insbesondere nach Ausführungsbeispiel 12, dadurch gekennzeichnet, dass beim Einbringen in die Integrationsvorrichtung zwischen zwei miteinander zu verbindenden Bauteilen, insbesondere zwischen zwei Segmenten, zu ihrer Verbindung ein Spalt für die Eingabe wenigstens eines Verbindungsmaterials belassen wird.
18. Verfahren nach Ausführungsbeispiel 17, dadurch gekennzeichnet, dass der Spalt für den Eintritt eines fließfähigen Verbindungsmaterials und für ein festes Material, vorzugsweise ein Fasermaterial, vorgesehen wird.
19. Verfahren nach einem der vorhergehenden Ausführungsbeispiele, dadurch gekennzeichnet, dass zur Erwärmung, Trocknung und/oder Aushärtung von Bauteilen und/oder Bauteilverbindungen wenigstens eine elektrische Heizeinrichtung, vorzugsweise eine Mikrowelleneinrichtung oder eine Heizdecke, verwendet wird.
20. Verfahren nach Ausführungsbeispiel 19, dass zunächst die Bauteile ausgehärtet oder vorgehärtet werden, die Bauteile danach in die Integrationsvorrichtung eingegeben werden, dort miteinander verbunden werden und danach die Verbindung und/oder der Verbund der Bauteile getrocknet und/oder ausgehärtet wird.
21. Verfahren nach einem der vorhergehenden Ausführungsbeispiele, dadurch gekennzeichnet, dass zur Fertigung von Bauteilen zeitlich parallel verwendbare Fertigungsformen verwendet werden.
22. Verfahren nach einem der vorhergehenden Ausführungsbeispiele, dadurch gekennzeichnet, dass eine zeitlich parallele Fertigung von Bauteilen durchgeführt wird, bei der die zu fertigenden Bauteile, insbesondere nach ihrer Art, Beschaffenheit und/oder Größe, so konzipiert sind oder werden, dass die Bauteile gemeinsam innerhalb von 24 Stunden für die Integrationsvorrichtung bereitgestellt werden können.
23. Verfahren nach einem der vorhergehenden Ausführungsbeispiele, dadurch gekennzeichnet, dass die Fertigung der Bauteile und deren Integration in der Integrationsvorrichtung so geplant und durchgeführt wird, dass ein oder das Rotorblatt im Wesentlichen innerhalb von 48 Stunden bereitgestellt werden kann.
24. Verfahren zur Fertigung eines Rotorblatts für eine Windenergieanlage, vorzugsweise nach einem der vorhergehenden Ausführungsbeispiele, dadurch gekennzeichnet, dass eine Integrationsvorrichtung als Fertigungsform für eine Halbschale eines Rotorblattflügels verwendet wird, wobei die Fertigung vorzugsweise mittels einer vorgenannten Kunststofftechnik erfolgt und wobei wenigstens ein erstes Segment vorgefertigt oder halbvorgefertigt in die Integrationsvorrichtung eingelegt wird und wenigstens ein zweites Segment erst in der Integrationsvorrichtung an dem ersten Segment oder unter Integration des ersten Segmentes gefertigt wird.
25. Verfahren nach Ausführungsbeispiel 24, dadurch gekennzeichnet, dass in der Integrationsvorrichtung bei der Fertigung der Halbschale des Rotorblattes ein fertiges oder halbfertiges erstes Segment und ein zweites zu fertigendes Segment einander räumlich bei der Belegung der Integrationsvorrichtung abwechseln.
26. Verfahren nach einem der vorhergehenden Ausführungsbeispiele, insbesondere nach Ausführungsbeispiel 24 oder 25, dadurch gekennzeichnet, dass wenigstens ein Gurt und wenigstens ein Steg vorgefertigt werden und in der Integrationsvorrichtung mit einer Halbschale eines Rotorblattes integriert oder verbunden werden.
27. Verfahren nach Ausführungsbeispiel 26, dadurch gekennzeichnet, dass wenigstens ein Gurt oder ein Steg eine Trennung zwischen zwei Segmenten der Halbschale überbrückt.
28. Verfahren zur Fertigung eines Rotorblatts für eine Windenergieanlage, vorzugsweise nach einem der vorhergehenden Ausführungsbeispiele, insbesondere nach Ausführungsbeispiel 26 oder 27, dadurch gekennzeichnet, dass wenigstens eine Gurt-Steg-Baugruppe vorgefertigt und in die Integrationsvorrichtung zur Verbindung mit einer Schale des Rotorblattes gegeben wird.
29. Verfahren nach Ausführungsbeispiel 28, dadurch gekennzeichnet, dass die Halbschale wenigstens teilweise in der Integrationsvorrichtung gefertigt wird und dabei die Gurt-Steg-Baugruppe in die Halbschale integriert wird.
30. Verfahren nach Ausführungsbeispiel 29, dadurch gekennzeichnet, dass wenigstens eine Lage, insbesondere Faserlage, zur Fertigung der Halbschale zur Verbindung der Halbschale mit der Gurt-Steg-Baugruppe verwendet wird.
31. Verfahren nach einem der vorhergehenden Ausführungsbeispiele, insbesondere nach Ausführungsbeispiel 9, dadurch gekennzeichnet, dass für die Fertigung der Halbschale unter Einsatz einer Vakuuminfusionstechnik oder einer sonstigen, durch Vakuum unterstützten Kunststofftechnik eine Vakuumabdichtung mit wenigstens einer Folie erfolgt und dass die Gurt-Steg-Baugruppe in die Abdichtung zur Fertigung der Halbschale zu ihrer Verbindung mit der Halbschale mit einbezogen wird.
32. Verfahren nach einem der Ausführungsbeispiele 28 bis 31, dadurch gekennzeichnet, dass eine im Wesentlichen L-förmige Gurt-Steg-Baugruppe gefertigt wird, in der Weise, das ein Gurt und ein Steg im Wesentlichen etwa L-förmig zueinander ausgerichtet sind.
33. Verfahren nach Ausführungsbeispiel 32, dadurch gekennzeichnet, dass die L-Form mit einer Schale eines Rotorblattes verbunden wird, derart, dass der Steg aus der Schale aufragt und dass diese L-Form mit einer entsprechenden L-Form einer anderen Schale bei der Verbindung der beiden Schalen miteinander im Wesentlichen eine Kastenform bildet.
34. Verfahren nach Ausführungsbeispiel 32 oder 33, dadurch gekennzeichnet, dass zur Fertigung der L-Form eine Fertigungsform verwendet wird, in der der an der L-Form beteiligte Gurt und der beteiligte Steg im richtigen Winkel zueinander angeordnet und/oder gefertigt werden.
35. Verfahren nach Ausführungsbeispiel 34, dadurch gekennzeichnet, dass wenigstens der Gurt oder der Steg vorgefertigt in die Fertigungsform eingelegt wird und das andere Teil, vorzugsweise mit Lagen für eine Kunststofftechnik, gefertigt wird.
36. Verfahren zur Fertigung eines Rotorblatts für eine Windenergieanlage nach einem der vorhergehenden Ausführungsbeispiele, insbesondere nach Ausführungsbeispiel 34 oder 35, dadurch gekennzeichnet, dass wenigstens ein Bauteil, vorzugsweise wenigstens der Gurt oder der Steg, aus vorgefertigten Teilen, sogenannten Prepregs, gefertigt wird.
37. Verfahren nach einem der Ausführungsbeispiele 32 bis 36, dadurch gekennzeichnet, dass wenigstens eine Lage zur Fertigung wenigstens des Gurtes oder des Steges so in die Fertigungsform eingelegt wird, dass sie eine Stoßfuge zwischen den beiden Teilen überbrückt, vorzugsweise umschlingt, derart, dass bei der Fertigung des Gurtes und/oder des Steges eine Verbindung zwischen den Teilen auch durch diese Lage entsteht.
38. Verfahren nach Ausführungsbeispiel 37, dadurch gekennzeichnet, dass der Steg zur Ausbildung von Verbindungsflanschen im Wesentlichen etwa C-förmig ausgebildet wird.
39. Verfahren nach einem der Ausführungsbeispiele 34 bis 38, dadurch gekennzeichnet, dass die Fertigungsform eine im Wesentlichen etwa V-förmige Mulde zur L-förmigen Einbringung von Material aufweist.
40. Verfahren nach einem der Ausführungsbeispiele 34 bis 39, dadurch gekennzeichnet, dass die Fertigungsform um eine im Wesentlichen waagerechte Achse schwenkbar ist.
41. Rotorblatt für eine Windenergieanlage, das sich in betriebsbereitem Zustand von einem Blattwurzelbereich zum Anschluss an eine Rotornabe der Windenergieanlage bis zu einer Blattspitze längserstreckt und das für seine Fertigung in wenigstens zwei Segmente eingeteilt ist, wobei wenigstens eine Unterteilung etwa quer zu seiner Längserstreckung zwischen dem Blattwurzelbereich und der Blattspitze vorgesehen ist, dadurch gekennzeichnet, dass die wenigstens zwei Segmente in einer Integrationsvorrichtung miteinander verbunden sind.
42. Rotorblatt nach Ausführungsbeispiel 41, dadurch gekennzeichnet, dass wenigstens zwei Unterteilungen etwa quer zur Längserstreckung des Rotorblattes zwischen dem Blattwurzelbereich und der Blattspitze zur Bildung von wenigstens drei Segmenten vorgesehen sind.
43. Rotorblatt nach Ausführungsbeispiel 41 oder 42, dadurch gekennzeichnet, dass das Rotorblatt im Wesentlichen in eine Unterhalbschale und eine Oberhalbschale unterteilt ist und die Segmentierung pro Halbschale vorgesehen ist.
44. Rotorblatt nach einem der Ausführungsbeispiele 41 bis 43, dadurch gekennzeichnet, dass wenigstens eine etwa in Längserstreckung des Rotorblattes verlaufende Unterteilung zur Segmentierung des Rotorblattes vorgesehen ist.
45. Rotorblatt nach einem der Ausführungsbeispiele 41 bis 44, dadurch gekennzeichnet, dass in der Integrationsvorrichtung ein oder mehrere Stege, ein oder mehrere Gurte, Rotorblattwurzelteile, Segmente und/oder aus Segmenten gebildete Rotorblattschalen miteinander zu verbinden oder verbunden sind.
46. Rotorblatt nach Ausführungsbeispiel 45, dadurch gekennzeichnet, dass die Stege, Gurte, Rotorblattwurzelteile und/oder Segmente mit einer Kunststofftechnik gefertigt sind.
47. Rotorblatt nach Ausführungsbeispiel 46, dadurch gekennzeichnet, dass mit der Kunststofftechnik wenigstens ein Bauteil unter Verwendung von wenigstens einem Harz und wenigstens einer Faserlage, insbesondere aus Glasfasern und/oder Kohlefasern, gefertigt ist.
48. Rotorblatt nach einem der Ausführungsbeispiel 41 bis 47, dadurch gekennzeichnet, dass die Segmente und/oder (andere) Bauteile miteinander verklebt sind.
49. Rotorblatt nach einem der Ausführungsbeispiele 41 bis 48, dadurch gekennzeichnet, dass die Segmente und/oder (andere) Bauteile durch eine der vorgenannten Kunststofftechniken miteinander verbunden sind.
50. Rotorblatt nach einem der Ausführungsbeispiele 41 bis 49, dadurch gekennzeichnet, dass die Segmente und/oder Bauteile durch Kraft- und/oder Formschlussverbindungen, insbesondere durch Laschen, Fügen, Schäften, Nut und Federn oder dergleichen, miteinander verbunden sind.
51. Rotorblatt für eine Windenergieanlage, vorzugsweise nach einem der Ausführungsbeispiele 41 bis 50, dadurch gekennzeichnet, dass wenigstens eines der mit wenigstens einem anderen Bauteil zu verbindenden Bauteile besäumt ist.
52. Rotorblatt nach Ausführungsbeispiel 51, dadurch gekennzeichnet, dass die Besäumung Balsaholz oder ein Balsaholzsandwich umfasst.
53. Rotorblatt nach Ausführungsbeispiel 51 oder 52, dadurch gekennzeichnet, dass ein Gurt besäumt ist.
54. Rotorblatt nach einem der Ausführungsbeispiele 41 bis 53, dadurch gekennzeichnet, dass für eine zeitlich parallele Fertigung von Bauteilen die zu fertigenden Bauteile, insbesondere nach ihrer Art, Beschaffenheit und/oder Größe, so konzipiert sind, dass die Bauteile gemeinsam innerhalb von 24 Stunden für die Integrationsvorrichtung bereitgestellt werden können.
55. Rotorblatt nach Ausführungsbeispiel 54, dadurch gekennzeichnet, dass die Segmente so konzipiert sind, dass sie etwa gleich große Flächen haben oder abdecken.
56. Rotorblatt nach einem der Ausführungsbeispiele 41 bis 55, dadurch gekennzeichnet, dass wenigstens ein Gurt und wenigstens ein Steg vorgefertigt sind und mit einer Halbschale eines Rotorblattes integriert oder vorverbunden sind.
57. Rotorblatt nach Ausführungsbeispiel 56, dadurch gekennzeichnet, dass wenigstens ein Gurt oder ein Steg eine Trennung zwischen zwei Segmenten der Halbschale überbrückt.
58. Rotorblatt für eine Windenergieanlage, vorzugsweise nach einem der vorhergehenden Ausführungsbeispiele, insbesondere nach Ausführungsbeispiel 56 oder 57, dadurch gekennzeichnet, dass wenigstens eine Gurt-Steg-Baugruppe vorgefertigt und mit einer Halbschale des Rotorblattes vorverbunden ist.
59. Rotorblatt nach Ausführungsbeispiel 58, dadurch gekennzeichnet, dass wenigstens eine Lage, insbesondere Faserlage, bei der Fertigung der Halbschale zur Verbindung der Halbschale mit der Gurt-Steg-Baugruppe verwendet worden ist.
60. Rotorblatt nach einem der Ausführungsbeispiele 58 bis 59, dadurch gekennzeichnet, dass es eine im Wesentlichen L-förmige Gurt-Steg-Baugruppe umfasst.
61. Rotorblatt nach Ausführungsbeispiel 60, dadurch gekennzeichnet, dass die L-Form mit einer Schale eines Rotorblattes verbunden ist, derart, dass der Steg aus der Schale aufragt und dass diese L-Form mit einer entsprechenden L-Form einer anderen Schale bei der Verbindung der beiden Schalen miteinander im Wesentlichen eine Kastenform bildet.
62. Rotorblatt für eine Windenergieanlage nach einem der Ausführungsbeispiele 41 bis 61, dadurch gekennzeichnet, dass wenigstens ein Bauteil, vorzugsweise wenigstens der Gurt oder der Steg, aus vorgefertigten Teilen, sogenannten Prepregs, gefertigt ist.
63. Rotorblatt nach einem der Ausführungsbeispiele 41 bis 62, dadurch gekennzeichnet, dass wenigstens eine Lage zur Fertigung wenigstens des Gurtes oder des Steges derart eine Stoßfuge zwischen zwei Teilen überbrückt, vorzugsweise umschlingt, dass eine Verbindung zwischen den Teilen auch durch diese Lage gegeben ist.
64. Rotorblatt nach Ausführungsbeispiel 63, dadurch gekennzeichnet, dass der Steg zur Ausbildung von Verbindungsflanschen im Wesentlichen etwa C-förmig ausgebildet ist.
65. Fertigungsform zur Fertigung eines Rotorblattes für eine Windenergieanlage, dadurch gekennzeichnet, dass eine zur Verbindung wenigstens zweier Segmente oder Bauteile vorgesehene Integrationsvorrichtung als Fertigungsform für eine Halbschale eines Rotorblatts ausgebildet ist, in der die Fertigung vorzugsweise mittels einer vorgenannten Kunststofftechnik erfolgt und in die wenigstens ein erstes Segment vorgefertigt oder halbvorgefertigt einlegbar ist und wenigstens ein zweites Segment erst in der Integrationsvorrichtung an dem ersten Segment oder unter Integration des ersten Segmentes zu fertigen ist.
66. Fertigungsform, vorzugsweise nach Ausführungsbeispiel 65, dadurch gekennzeichnet, dass sie zur Fertigung einer aus einem Gurt und einem Steg gebildeten L-Form vorgesehen ist, in der der an der L-Form beteiligte Gurt und der beteiligte Steg im richtigen Winkel zueinander anzuordnen und/oder zu fertigen sind.
67. Fertigungsform nach Ausführungsbeispiel 66, dadurch gekennzeichnet, dass die Fertigungsform eine im Wesentlichen etwa V-förmige Mulde zur L-förmigen Einbringung von Material aufweist.
68. Fertigungsform nach einem der Ausführungsbeispiele 66 oder 67, dadurch gekennzeichnet, dass die Fertigungsform um eine im Wesentlichen waagerechte Achse schwenkbar ist.

## Patentansprüche

1. Verfahren zur Fertigung eines Rotorblattes für eine Windenergieanlage, das sich in betriebsbereitem Zustand von einem Blattwurzelbereich zum Anschluss an eine Rotornabe der Windenergieanlage bis zu einer Blattspitze längserstreckt, wobei das Rotorblatt für seine Fertigung in wenigstens zwei Segmente eingeteilt ist, wobei wenigstens eine Unterteilung etwa quer zu seiner Längserstreckung zwischen dem Blattwurzelbereich und der Blattspitze vorgesehen ist, wobei die wenigstens zwei Segmente des Rotorblatts in einer tntegrationsvorrichtung (41) miteinander verbunden werden, wobei eine Gurt-Steg-Baugruppe (31,32) vorgesehen ist, **dadurch gekennzeichnet, dass** für die Fertigung einer Halbschale des Rotorblatts unter Einsatz einer Vakuuminfusionstechnik oder einer sonstigen, durch Vakuum unterstützten Kunststofftechnik eine Vakuumabdichtung (42,43) mit wenigstens einer Folie (40) erfolgt und dass die Gurt-Steg-Baugruppe (31,32) in die Abdichtung zur Fertigung der Halbschale zu ihrer Verbindung mit der Halbschale mit einbezogen wird.

2. Verfahren nach Anspruch 1, **dadurch gekennzeichnet, dass** wenigstens zwei Unterteilungen etwa quer zur Längserstreckung des Rotorblattes zwischen dem Blattwurzelbereich und der Blattspitze zur Bildung von wenigstens drei Segmenten vorgesehen sind, wobei insbesondere das Rotorblatt im Wesentlichen in eine Unterhalbschale und eine Oberhalbschale unterteilt wird und die Segmentierung pro Halbschale vorgesehen wird, wobei insbesondere wenigstens eine etwa in Längserstreckung des Rotorblattes verlaufende Unterteilung zur Segmentierung des Rotorblattes vorgesehen ist.

3. Verfahren nach Anspruch 1 oder 2, **dadurch gekennzeichnet, dass** in der Integrationsvorrichtung ein oder mehrere Stege, ein oder mehrere Gurte, ein oder mehrere Rotorblattwurzelteile, Segmente und/oder aus Segmenten gebildete Rotorblattschalen miteinander verbunden werden, wobei insbesondere die Stege, Gurte, Rotorblattwurzelteile und/oder Segmente mit einer Kunststofftechnik gefertigt werden, wobei insbesondere bei der Kunststofftechnik wenigstens ein Harz und wenigstens eine Faserlage, insbesondere aus Glasfasern und/oder Kohlefasern, verwendet wird, wobei insbesondere eine Spritzpresstechnik verwendet wird, wobei insbesondere eine Infusionstechnik verwendet wird, insbesondere eine durch Vakuum unterstütze Infusionstechnik, wobei insbesondere eine Laminiertechnik verwendet wird.

4. Verfahren nach einem der vorhergehenden Ansprüche, **dadurch gekennzeichnet, dass** in der Integrationsvorrichtung Segmente und/oder, insbesondere andere, Bauteile miteinander verklebt werden, wobei insbesondere in der Integrationsvorrichtung Segmente und/oder, insbesondere andere, Bauteile mit einer der vorgenannten Kunststofftechniken miteinander verbunden werden, wobei insbesondere in der Integrationsvorrichtung Segmente und/oder Bauteile durch Kraft- und/oder Formschlussverbindungen, insbesondere durch Laschen, Fügen, Schäften, Nut und Federn oder dergleichen, miteinander verbunden werden.

5. Verfahren nach einem der vorhergehenden Ansprüche, **dadurch gekennzeichnet, dass** wenigstens ein mit wenigstens einem anderen Bauteil zu verbindendes Bauteil besäumt wird, wobei insbesondere zur Besäumung Balsaholz oder ein Balsaholzsandwich verwendet wird, wobei insbesondere ein Gurt besäumt wird, wobei insbesondere beim Einbringen in die Integrationsvorrichtung zwischen zwei miteinander zu verbindenden Bauteilen, insbesondere zwischen zwei Segmenten, zu ihrer Verbindung ein Spalt für die Eingabe wenigstens eines Verbindungsmaterials belassen wird, wobei insbesondere der Spalt für den Eintritt eines fließfähigen Verbindungsmaterials und für ein festes Material, vorzugsweise ein Fasermaterial, vorgesehen wird, wobei insbesondere zur Erwärmung, Trocknung und/oder Aushärtung von Bauteilen und/oder Bauteilverbindungen wenigstens eine elektrische Heizeinrichtung, vorzugsweise eine Mikrowelleneinrichtung oder eine Heizdecke, verwendet wird, wobei insbesondere zunächst die Bauteile ausgehärtet oder vorgehärtet werden, die Bauteile danach in die Integrationsvorrichtung eingegeben werden, dort miteinander verbunden werden und danach die Verbindung und/oder der Verbund der Bauteile getrocknet und/oder ausgehärtet wird.

6. Verfahren nach einem der vorhergehenden Ansprüche, **dadurch gekennzeichnet, dass** zur Fertigung von Bauteilen zeitlich parallel verwendbare Fertigungsformen verwendet werden, wobei insbesondere eine zeitlich parallele Fertigung von Bauteilen durchgeführt wird, bei der die zu fertigenden Bauteile, insbesondere nach ihrer Art, Beschaffenheit und/oder Größe, so konzipiert sind oder werden, dass die Bauteile gemeinsam innerhalb von 24 Stunden für die Integrationsvorrichtung bereitgestellt werden können, wobei insbesondere die Fertigung der Bauteile und deren Integration in der Integrationsvorrichtung so geplant und durchgeführt wird, dass ein oder das Rotorblatt im Wesentlichen innerhalb von 48 Stunden bereitgestellt werden kann.

7. Verfahren zur Fertigung eines Rotorblatts für eine Windenergieanlage nach einem der vorhergehenden Ansprüche, **dadurch gekennzeichnet, dass** eine Integrationsvorrichtung als Fertigungsform für eine Halbschale eines Rotorblattflügels verwendet wird, wobei die Fertigung vorzugsweise mittels einer vorgenannten Kunststofftechnik erfolgt und wobei wenigstens ein erstes Segment vorgefertigt oder halbvorgefertigt in die Integrationsvorrichtung eingelegt wird und wenigstens ein zweites Segment erst in der Integrationsvorrichtung an dem ersten Segment oder unter Integration des ersten Segmentes gefertigt wird, wobei insbesondere in der Integrationsvorrichtung bei der Fertigung der Halbschale des Rotorblattes ein fertiges oder halbfertiges erstes Segment und ein zweites zu fertigendes Segment einander räumlich bei der Belegung der Integrationsvorrichtung abwechseln, wobei insbesondere wenigstens ein Gurt und wenigstens ein Steg vorgefertigt werden und in der Integrationsvorrichtung mit einer Halbschale eines Rotorblattes integriert oder verbunden werden, wobei insbesondere ein Gurt oder ein Steg eine Trennung zwischen zwei Segmenten der Halbschale überbrückt.

8. Verfahren zur Fertigung eines Rotorblatts für eine Windenergieanlage nach einem der vorhergehenden Ansprüche, **dadurch gekennzeichnet, dass** wenigstens eine Gurt-Steg-Baugruppe vorgefertigt und in die Integrationsvorrichtung zur Verbindung mit einer Schale des Rotorblattes gegeben wird, wobei insbesondere die Halbschale wenigstens teilweise in der Integrationsvorrichtung gefertigt wird und dabei die Gurt-Steg-Baugruppe in die Halbschale integriert wird, wobei insbesondere wenigstens eine Lage, insbesondere Faserlage, zur Fertigung der Halbschale zur Verbindung der Halbschale mit der Gurt-Steg-Baugruppe verwendet wird, wobei insbesondere eine im Wesentlichen L-förmige Gurt-Steg-Baugruppe gefertigt wird, in der Weise, dass ein Gurt und ein Steg im Wesentlichen etwa L-förmig zueinander ausgerichtet sind, wobei insbesondere die L-Form mit einer Schale eines Rotorblattes verbunden wird, derart, dass der Steg aus der Schale aufragt und dass diese L-Form mit einer entsprechenden L-Form einer anderen Schale bei der Verbindung der beiden Schalen miteinander im Wesentlichen eine Kastenform bildet, wobei insbesondere zur Fertigung der L-Form eine Fertigungsform verwendet wird, in der der an der L-Form beteiligte Gurt und der beteiligte Steg im richtigen Winkel zueinander angeordnet und/oder gefertigt werden, wobei insbesondere wenigstens der Gurt oder der Steg vorgefertigt in die Fertigungsform eingelegt wird und das andere Teil, vorzugsweise mit Lagen für eine Kunststofftechnik, gefertigt wird.

9. Verfahren zur Fertigung eines Rotorblatts für eine Windenergieanlage nach einem der vorhergehenden Ansprüche, **dadurch gekennzeichnet, dass** wenigstens ein Bauteil, vorzugsweise wenigstens der Gurt oder der Steg, aus vorgefertigten Teilen, sogenannten Prepregs, gefertigt wird, wobei insbesondere wenigstens eine Lage zur Fertigung wenigstens des Gurtes oder des Steges so in die Fertigungsform eingelegt wird, dass sie eine Stoßfuge zwischen den beiden Teilen überbrückt, vorzugsweise umschlingt, derart, dass bei der Fertigung des Gurtes und/oder des Steges eine Verbindung zwischen den Teilen auch durch diese Lage entsteht, wobei insbesondere der Steg zur Ausbildung von Verbindungsflanschen im Wesentlichen etwa C-förmig ausgebildet wird, wobei insbesondere die Fertigungsform eine im Wesentlichen etwa V-förmige Mulde zur L-förmigen Einbringung von Material aufweist, wobei insbesondere die Fertigungsform um eine im Wesentlichen waagerechte Achse schwenkbar ist.

## Claims

1. A method of manufacturing a rotor blade for a wind turbine, which extends longitudinally in the operational state from a blade root region at the connection to a rotor hub of the wind turbine to a blade tip, wherein the rotor blade is divided for its manufacture into at least two segments, wherein at least one division is provided approximately transversely to its longitudinal direction between the blade root region and the blade tip, wherein the at least two segments of the rotor blade are connected together in an integration device (41), wherein a spar cap-web assembly (31, 32) is provided, **characterised in that** for the manufacture of a semi shell of the rotor blade using a vacuum infusion procedure or some other plastic procedure assisted by vacuum, a vacuum seal (42, 43) is produced with at least one film (40) and that the spar cap-web assembly (31, 32) is incorporated into the seal for manufacturing the semi shell for its connection with the semi shell.

2. A method as claimed in claim 1, **characterised in that** at least two divisions are provided approximately transversely to the longitudinal direction of the rotor blade between the blade root region and the blade tip to form at least three segments, wherein, in particular, the rotor blade is divided into a lower semi shell and an upper semi shell and the segmentation is provided per semi shell, wherein, in particular, at least one division extending approximately in the longitudinal direction of the rotor blade is provided for segmentation of the rotor blade.

3. A method as claimed in claim 1 or 2, **characterised in that** one or more webs, one or more spar caps, one or more rotor blade root portions, segments and/or rotor blade shells constituted by segments are connected together in the integration device, wherein, in particular, the webs, spar caps, rotor blade root portions and/or segments are manufactured with a plastic procedure, wherein, in particular, at least one resin and at least one fibre layer, particularly of glass fibres and/or carbon fibres, is used in the plastic procedure, whereby, in particular, a transfer moulding procedure is used, whereby, in particular, an infusion procedure is used, particularly an infusion procedure assisted by vacuum, whereby in particular, a lamination procedure is used.

4. A method as claimed in one of the preceding claims, **characterised in that** segments and/or, particularly other, components are connected together by adhesive in the integration device, whereby, in particular, segments and/or, particularly other, components are connected together in the integration device with one of the aforementioned plastic procedures, whereby, in particular, segments and/or components are connected together in the integration device by adhesive and/or positively locking connections, particularly by straps, splices, shafts, tongues and grooves or the like.

5. A method as claimed in one of the preceding claims, **characterised in that** at least one component to be connected to another component is trimmed, whereby, in particular, for the trimming process balsa wood or a balsa wood sandwich is used, whereby, in particular, a spar cap is trimmed, wherein, in particular, on insertion into the integration device a gap is left for the introduction of at least one connection material between two components to be connected together, particularly between two segments, to connect them together, whereby, in particular, the gap is provided for the entry of a flowable connecting material and for a solid material, preferably a fibre material, wherein, in particular, at least one electrical heating device, preferably a microwave device or an electric cover is used, particularly for heating, drying and/or curing components and/or component connections, wherein, in particular, the components are firstly cured or pre-cured, the components are then introduced into the integration device, are connected together therein and thereafter the connection and/or the bond of the components is dried and/or cured.

6. A method as claimed in one of the preceding claims, **characterised in that** for the manufacture of components, manufacturing moulds usable temporally in parallel are used, wherein, in particular, temporally parallel manufacture of components is performed, in which the components to be manufactured are so designed, particularly in accordance with their type, nature and/or size that the components can be provided together within 24 hours for the integration device, whereby, in particular, the manufacture of the components and their integration in the integration device is so planned and performed that a or the rotor blade can be provided substantially within 48 hours.

7. A method of manufacturing a rotor blade for a wind turbine as claimed in one of the preceding claims, **characterised in that** an integration device is used as the manufacturing mould for a semi shell of a rotor blade wing, wherein the manufacture is preferably effected by means of a known plastics procedure and wherein at least one first segment is inserted into the integration device in prefabricated or semi fabricated form and at least one second segment is only produced in the integration device on the first segment or on integration with the first segment, wherein, in particular, in the manufacture of the semi shell of the rotor blade a finished or semi-finished first segment and a second segment to be produced alternate spatially with one another in the integration device when filling the integration device, wherein, in particular, at least one spar cap and at least one web are prefabricated and are integrated or connected in the integration device with a semi shell of a rotor blade, wherein, in particular, a spar cap or a web bridges a division between two segments of the semi shell.

8. A method of manufacturing a rotor blade for a wind turbine as claimed in one of the preceding claims, **characterised in that** at least one spar cap-web assembly is prefabricated and is inserted into the integration device for connection with a shell of the rotor blade, wherein, in particular, the semi shell is produced at least partially in the integration device and the spar cap-web assembly is thus integrated into the semi shell, wherein, in particular, at least one layer, particularly a fibre layer, is used for the manufacture of the semi shell to connect the semi shell to the spar cap-web assembly, wherein, in particular, a substantially L shaped spar cap-web assembly is produced such that a spar cap and a web are aligned in a substantially L shape with respect to one another, wherein, in particular, the L shape is connected to a shell of a rotor blade such that the web projects out of the shell and that this L shape together with a corresponding L shape of another shell substantially forms a box shape during the connection of the two shells together, wherein, in particular, a manufacturing mould is used to produce the L shape in which the spar cap and the web forming part of the L shape are arranged and/or produced at right angles to one another, wherein, in particular, at least the spar cap or the web is inserted in prefabricated form into the manufacturing mould and the other portion is manufactured, preferably with layers for a plastic procedure.

9. A method of manufacturing a rotor blade for a wind turbine as claimed in one of the preceding claims, **characterised in that** at least one component, preferably at least the spar cap or the web, is manufactured from prefabricated members, so-called prepregs, wherein, in particular, at least one layer for manufacturing at least the spar cap or the web is inserted into the manufacturing mould so that it bridges, preferably embraces, a butt joint between the two members such that during the manufacture of the spar cap and/or of the web a connection is produced between the members by this layer also, wherein, in particular, the web for forming connecting flanges is of substantially, generally C shape, wherein, in particular, the manufacturing mould has a substantially generally V shaped through for the L shaped introduction of material, wherein, in particular, the manufacturing mould is pivotable about a substantially horizontal axis.

## Revendications

1. Procédé pour la fabrication d'une pale de rotor pour une éolienne, qui s'étend dans la longueur dans l'état opérationnel depuis une zone de racine de pale pour le raccordement à un moyeu de rotor de l'éolienne jusqu'à une pointe de pale, la pale de rotor étant divisée pour sa fabrication en au moins deux segments, au moins une subdivision étant prévue à peu près transversalement à son extension longitudinale entre la zone de racine de rotor et la pointe de rotor, les au moins deux segments de la pale de rotor étant reliés l'un à l'autre par un dispositif d'intégration (41), un ensemble membrure-traverse (31, 32) étant prévu, **caractérisé en ce que**, pour la fabrication d'une demi-coque de la pale de rotor avec l'utilisation d'une technique d'infusion sous vide ou d'une autre technique de mise en oeuvre de matière plastique assistée par vide, on obtient une étanchéité sous vide (42, 43) avec au moins un film (40) et **en ce que** l'ensemble membrure-traverse (31, 32) est intégré également dans l'étanchéité pour la fabrication de la demi-coque pour sa liaison avec la demi-coque.

2. Procédé selon la revendication 1, **caractérisé en ce qu'**au moins deux subdivisions sont prévues à peu près transversalement à l'extension longitudinale de la pale de rotor entre la base de la racine de rotor et la pointe de rotor pour former au moins trois segments, en particulier la pale de rotor étant subdivisée sensiblement en une demi-coque inférieure et une demi-coque supérieure et la segmentation étant prévue par demi-coque, en particulier au moins une subdivision agencée à peu près dans l'extension longitudinale de la pale de rotor étant prévue pour la segmentation de la pale de rotor.

3. Procédé selon la revendication 1 ou 2, **caractérisé en ce qu'**une ou plusieurs traverses, une ou plusieurs membrures, une ou plusieurs parties de racine de pale de rotor, segments et/ou coques de pale de rotor formées de segments sont reliés les uns aux autres par le dispositif d'intégration, en particulier les traverses, membrures, parties de racine de pale de rotor et/ou segments étant fabriqués avec la technique de mise en oeuvre de matière plastique ; en particulier avec la technique de mise en oeuvre de matière plastique, on utilise au moins une résine et au moins une couche de fibre, en particulier à base de fibres de verre et/ou de fibres de carbone, en particulier on utilise une technique de compression de pulvérisation, on utilise en particulier une technique d'infusion, en particulier une technique d'infusion assistée par vide, en particulier une technique de laminage étant utilisée.

4. Procédé selon l'une des revendications précédentes, **caractérisé en ce que** des segments et/ou, en particulier d'autres éléments de construction sont collés les uns avec les autres dans le dispositif d'intégration, des segments et/ou en particulier d'autres éléments de construction étant reliés les uns aux autres avec l'une des techniques de mise en oeuvre de matière plastique susmentionnées dans le dispositif d'intégration, des segments et/ou des éléments de construction étant reliés les uns aux autres en particulier dans le dispositif d'intégration par des liaisons de force et/ou de complémentarité de formes, en particulier par des pattes, des joints, des tiges, rainures et languettes ou similaires.

5. Procédé selon l'une des revendications précédentes, **caractérisé en ce qu'**au moins un composant à relier à au moins un autre composant est déligné, en particulier du bois de balsa ou un sandwich en bois de balsa étant utilisé en particulier pour le délignage, sachant en particulier qu'on déligne une membrure, une fente étant aménagée pour recevoir au moins un matériau de liaison en particulier lors de l'introduction dans le dispositif d'intégration entre deux composants à relier l'un à l'autre, en particulier entre deux segments, pour leur liaison, sachant qu'en particulier la fente est prévue pour recevoir un matériau de liaison fluide et pour un matériau rigide, de préférence un matériau fibreux, au moins un dispositif de chauffage électrique, de préférence un dispositif à microondes ou une couverture chauffante, étant utilisé en particulier pour le réchauffement, le séchage et/ou le durcissement d'éléments de construction et/ou de liaisons d'éléments de construction, en particulier les éléments de construction étant durcis ou pré-durcis pour commencer, les éléments de construction étant entrés ensuite dans le dispositif d'intégration, étant reliés les uns aux autres à cet endroit et ensuite la liaison et/ou l'assemblage des composants étant ensuite séché et/ou durci.

6. Procédé selon l'une des revendications précédentes, **caractérisé en ce que**, pour la fabrication d'éléments de construction, on utilise des moules de fabrication, pouvant être utilisés parallèlement dans le temps, en particulier une fabrication parallèle dans le temps d'éléments de construction étant effectuée, dans la mise en oeuvre de laquelle les composants à fabriquer sont conçus en particulier selon leur nature, qualité et/ou grandeur de telle sorte que les composants peuvent être mis à disposition ensemble dans le délai de 24 heures pour le dispositif d'intégration, sachant qu'en particulier la fabrication des éléments de construction et leur intégration dans le dispositif d'intégration sont planifiées et mises en oeuvre de telle sorte qu'une pale de rotor peut être fournie sensiblement dans le délai de 48 heures.

7. Procédé pour fabriquer une pale de rotor pour une éolienne selon l'une des revendications précédentes, **caractérisé en ce qu'**un dispositif d'intégration est utilisé comme moule de fabrication pour une demi-coque d'une ailette de pale de rotor, la fabrication s'effectuant de préférence au moyen d'une technique de mise en oeuvre de matière plastique susmentionnée et au moins un premier segment étant introduit dans le dispositif d'intégration, préfabriqué ou semi-pré-fabriqué, et au moins un second segment étant fabriqué seulement dans le dispositif d'intégration sur le premier segment ou avec intégration du premier segment, un premier segment terminé ou semi-fini et un second segment à fabriquer alternant dans l'espace lors de l'occupation du dispositif d'intégration, en particulier dans le dispositif d'intégration, lors de la fabrication de la demi-coque de la pale de rotor, en particulier au moins une membrure et au moins une traverse étant fabriquées et étant intégrées ou reliées dans le dispositif d'intégration avec une demi-coque d'une pale de rotor, en particulier une membrure ou une traverse surmontant une séparation entre deux segments de la demi-coque.

8. Procédé pour fabriquer une pale de rotor pour une éolienne selon l'une des revendications précédentes, **caractérisé en ce qu'**au moins un ensemble membrure-traverse est préfabriqué et introduit dans le dispositif d'intégration pour la liaison avec une coque de la pale de rotor, en particulier la demi-coque étant fabriquée au moins partiellement dans le dispositif d'intégration et l'ensemble membrure-traverse étant intégré dans la demi-coque, sachant qu'en particulier au moins une couche, en particulier une couche de fibre, est utilisée pour la fabrication de la demi-coque pour la liaison de la demi-coque avec l'ensemble membrure-traverse, en particulier un ensemble membrure-traverse sensiblement en forme de L étant fabriqué en ce sens qu'une membrure et une traverse sont orientées sensiblement à peu près en forme de L l'une par rapport à l'autre, en particulier la forme de L étant reliée à une coque d'une pale de rotor de telle sorte que la traverse dépasse de la coque et que cette forme de L forme avec une forme de L appropriée d'une autre coque sensiblement une forme de caisse lors de la liaison des deux demi-coques l'une avec l'autre, un moule de fabrication étant utilisé en particulier pour la fabrication de la forme de L, moule dans lequel la membrure concernée par la forme de L et la traverse concernée sont disposées et/ou fabriquées en angle droit, sachant qu'en particulier au moins la membrure ou la traverse sont introduites de façon préfabriquée dans le moule de fabrication et l'autre partie est fabriquée, de préférence avec des couches pour une technique de mise en oeuvre de matière plastique.

9. Procédé pour fabriquer une pale de rotor pour une éolienne selon l'une des revendications précédentes, **caractérisé en ce qu'**au moins un composant, de préférence au moins la membrure ou la traverse, est fabriquée à base de parties préfabriquées, appelées pré-imprégnés, sachant qu'en particulier au moins une couche est introduite dans le moule de fabrication pour la fabrication au moins de la membrure ou de la traverse, de telle sorte qu'elle surmonte, de préférence enveloppe, en joint entre les deux parties de telle sorte que, lors de la fabrication de la membrure et/ou de la traverse, une liaison se forme entre les parties également par cette couche, sachant qu'en particulier la traverse pour la formation de brides de liaison est conçue sensiblement en forme de C, en particulier la forme de fabrication présentant une cavité sensiblement en forme de V pour l'introduction en forme de L de matériau, en particulier la forme de fabrication pouvant basculer autour d'un axe sensiblement horizontal.
